**Europäisches Patentamt**

**European Patent Office**

**Office européen des brevets**

(11) Veröffentlichungsnummer: **0 001 298**
**B1**

(12) **EUROPÄISCHE PATENTSCHRIFT**

(45) Veröffentlichungstag der Patentschrift: **29.07.81**

(51) Int. Cl.³: **F 16 H 5/66**

(21) Anmeldenummer: **78200011.1**

(22) Anmeldetag: **01.06.78**

(54) Gangwechseleinrichtung für Lastschaltgetriebe.

(30) Priorität: **19.09.77 DE 2742031**

(43) Veröffentlichungstag der Anmeldung:
**04.04.79 Patentblatt 79/7**

(45) Bekanntmachung des Hinweises auf die Patenterteilung:
**29.07.81 Patentblatt 81/30**

(84) Benannte Vertragsstaaten:
**CH DE FR GB NL SE**

(56) Entgegenhaltungen:
**DE - A - 1 941 445**
**DE - A - 1 945 444**
**FR - A - 2 109 792**
**FR - A - 2 139 531**
**FR - A - 2 154 235**
**US - A - 3 710 651**

(73) Patentinhaber: **ROBERT BOSCH GMBH**
**Postfach 50**
**D-7000 Stuttgart 1 (DE)**

(72) Erfinder: **Espenschied, Helmut**
**Turmstrasse 8**
**D-7140 Ludwigsburg (DE)**
Erfinder: **Kiencke, Uwe, Dr.**
**Reichardshalde 35**
**D-7140 Ludwigsburg (DE)**
Erfinder: **Schulz, Alfred**
**Weilerstrasse 1**
**D-7141 Oberriexingen (DE)**

(74) Vertreter: **Witte, Alexander, Dr.-Ing.**
**Robert-Bosch-Platz 1 c/o Robert Bosch GmbH**
**D-7016 Gerlingen-Schillerhöhe (DE)**

Courier Press, Leamington Spa, England.

# 0 001 298

## Gangwechseleinrichtung für Lastschaltgetriebe

### Stand der Technik

Die Erfindung geht aus von einer Gangwechselvorrichtung nach dem Oberbegriff des Hauptanspruches wie sie aus der DE - A - 20 36 732 bekannt vor.

Bei Antrieben der verschiedensten Art, beispielsweise in Kraftfahrzeugen, werden Stufenwechselgetriebe verwendet, um die Antriebsleistung eines Antriebsmotors auf den Abtrieb, etwa von einer Brennkraftmaschine auf die Rädar, zu übertragen. Das Stufenwechselgetriebe dient hierbei zur bestmöglichen Ausnutzung günstiger Drehmomentbereiche des Antriebsmotors. Je nach Art des verwendeten Stufengetriebes wird während des Umschaltvorganges von einem Übersetzungsverhältnis in ein anderes die Zugkraft vom Antriebsmotor auf den Abtrieb unterbrochen oder nicht unterbrochen. Im letzteren Fall spricht man von Lastschaltgetrieben. Die heute üblichen Lastschaltgetriebe für Kraftfahrzeuge sind meist als Planetengetriebe ausgebildet, bei denen zum Wechsel des Übersetzungsverhältnisses jeweils Getriebeteile des Planetensatzes, beispeilsweise die Sonne oder die Planeten oder der Steg, mit Hilfe von hydraulisch betätigbaren Kupplungen oder Bremsen, getrennt, angetrieben oder abgebremst werden. Hierzu sind Gangschaltventile vorgesehen, die die hydraulische Betätigung der den einzelnen Gängen zugeordneten Getriebeteile bewirken. Beim Umschalten eines Lastschaltgetriebes von einem alten in einen neuen Gang ist es daher erforderlich, das dem alten Gang zugeordnete Gangschaltventil abzuschalten und das dem neuen Gang zugeordnete Gangschaltventil zuzuschalten. Zur Vermeidung einer Zugkraftunterbrechung ist es dabei erforderlich, zunächst das dem neuen Gang zugeordnete Gangschaltventil zuzuschalten und erst dann das dem alten Gang zugeordnete Gangschaltventil abzuschalten. Dieses Verfahren wird als positive Überschneidungssteuerung bezeichnet. Da beim Umschalten des Stufengetriebes von einem Übersetzungsverhältnis in ein anderes ein Drehmomentübergang im Antrieb stattfindet, ist es notwendig, in den Umschaltvorgang einzugreifen, um Drehmomentspitzen zu vermeiden, die einen Ruck im Antrieb zur Folge haben. Insbesondere ist es erforderlich, die Drehzahl am Eingang und Ausgang des Stufengetriebes zu erfassen, um den Umschaltvorgang in Abhängigkeit vom Erreichen des Synchronpunktes, d.h. des Gleichlaufes zwischen Getriebeein- und ausgang ablaufen lassen zu können.

Von der Systematik der Ansteuerung der Gangschaltventile hängt also das Schaltverhalten des Stufengetriebes ab. Dieses wiederum bestimmt einerseits den Verschleiß und damit die Lebensdauer des Stufengetriebes, andererseits jedoch auch die Schaltqualität und damit z.B. den Fahrkomfort bei Kraftfahrzeugen.

Zur Steuerung von Stufengetrieben, insbesondere Automatikgetrieben in Personenkraftwagen und Schwerlastfahrzeugen werden zunehmend elektronische Anordnungen verwendet. Aus der DT—A 2 036 732 ist eine Anordnung zum selbsttätigen Schalten von Stufenwechselgetrieben mit einer digitalen Steuerschaltung bekannt. Bei dieser Anordnung werden elektronische Geber zur Erfassung der Motordrehzahl und der Getriebeausgangsdrehzahl verwendet und die entsprechenden Signale Schmitt-Triggern zugeführt, so daß eine Erfassung von Untersynchronlauf, Synchronlauf oder Übersynchronlauf möglich ist. In Abhängigkeit von diesen Betriebszuständen werden Synchronisierhilfen, beispielsweise eine Vorgelegebremse, eine Motorbremse oder ein Kraftstoffregler betätigt. Nachteil dieser Anordnung ist, daß ein Zusammenwirken von rein mechanischen Synchronisierhilfen (Vorgelegbremse, Motorbremse) mit einem Kraftstoffregler umständlich und daher im Betrieb eines Kraftfahrzeuges problematisch ist.

Weiterhin ist vorgeschlagen worden, den Drehmomentübergang beim Umschalten eines Stufengetriebes dadurch zu beeinflussen, daß die Kraftstoffzufuhr beim Gangwechsel kurzzeitig unterbrochen wird und zwar beim Hochschalten mit dem Gangwechselsignal und beim Rückschalten gegenüber dem Gangwechselsignal verzögert. Dieses Verfahren ist jedoch relativ ungenau und eignet sich nur für einfache Antriebe.

Neben den geschilderten Möglichkeiten zur Regelung des Drehmomentverlaufes durch Beeinflussung des Motors ist es auch bekannat, einen geeigneten Drehmomentübergang durch Beeinflussung der Schaltglieder des Stufengetriebes, d.h. der Kupplungen und Bremsen herbeizuführen. Hierzu wird in der Regel als Bezugsgröße der Fahrzeugruck verwendet und die Ansteuerung der Kupplungen und Bremsen des Stufengetriebes so gewählt, daß der Fahrzeugruck minimiert wird.

Aus der DT—A 2 124 024 ist eine Vorrichtung zur Regelung oder Steuerung von Schaltgliedern automatischer Stufengetriebe bekannt, bei der die Kupplungen und Bremsen des Stufengetriebes auf eine vorgegebene Änderung der Motordrehzahl abhängig von der Zeit geregelt werden. Dieser vorgegebene Betrag der Änderung der Motordrehzahl wird abhängig vom Betrag der Motordrehzahl, dem Motordrehmoment, der Schaltrichtung, der gewählten Schaltstufe, der Getriebeöltemperatur und dem Ladungszustand des Fahrzeugs festgelegt. Der so ermittelte Sollwert des Rucks und der durch zeitliche Ableitung der Motordrehzahl ermittelte Istwert des Rucks werden auf einen Regler gegeben, der über einen Verstärker und ein Stellglied auf ein Druckregelglied zur Betätigung der Reibelemente einwirkt. Die während des Schaltvorganges auftretenden Spitzen im zeitlichen Verlauf des Drehmomentes und des Öldrucks im Druckregelglied werden dadurch vermindert, daß Verzögerungsglieder, beispielsweise RC—Glieder in der Elektronik oder Öldüsen in der Hydraulik vorgesehen werden. Nachteil dieser Vorrichtung ist, daß der tatsächlich vorliegende Schaltruck nur unvollkommen erfaßt und der sich nach Beendigung des Schaltvorganges einstellende Ruck nicht berücksichtig wird.

Weiterhin ist vorgeschlagen worden, den Istruck zu ermitteln, den sich nach Beendigung des Schaltvorganges einstellenden Ruck vorauszuberechnen und eine Regelung der Kupplungen und Bremsen des Stufengetriebes in der Weise vorzunehmen, daß der Istruck während des Umschaltvorganges und nach Beendigung des Umschaltvorganges einen vorgegebenen Wert nicht überschreitet.

Schließlich ist vorgeschlagen worden, eine Regelung der Kupplungen und Bremsen des Stufengetriebes dahingehend durchzuführen, daß die Differenz der am Eingang und Ausgang des Stufengetriebes auftretenden Drehzahlen zunächst auf einen vorbestimmten Betrag reduziert wird und anschließend auf einen vorgegebenen Schnittwinkel der zeitlichen Verläufe von Getriebeeingangs- und Getriebeausgangsdrehzahl geregelt wird.

Die genannten Vorrichtungen haben den gemeinsamen Nachteil, daß sie die unterschiedlichen Verhältnisse bei den Betriebsweisen Hoch/Rückschaltung und Schub/Lastschaltung nicht berücksichtigen. Außerdem wird der gewünschte Drehmomentübergang lediglich durch Beeinflussung eines Antriebsteiles, d.h. entweder des Motors einerseits oder der Kupplungen bzw. Bremsen andererseits erreicht.

Vorteile der Erfindung

Die erfinsungsgemäße Gangwechseleinrichtung mit den kennzeichnenden Merkmalen des Hauptanspruches hat demgegenüber den Vorteil, bei der Regelung des Drehmomentüberganges während des Gangwechsels sowohl Motor wie Getriebe in den Regelkreis mit einzubeziehen. Durch definierte Regelung der Motordrehzahl während des Umschaltvorganges und gleichzeitige Festlegung der Schaltpunkte der Gangschaltventile sowie Regelung des Hauptdruckreglers in Abhängigkeit von dem jeweiligen Betriebsfall wird eine weitgehende Unabhängigkeit von der Motorcharakteristik, der Getriebecharacteristik, dem Zustand des gesamten Antriebes und den verwendeten Antriebs- und Schmierstoffen erreicht. Damit entfällt die Abhängigkeit des Umschaltvorganges von der Drehmomentkennlinie des Antriebsmotors und hierdurch ist die Verwendung einer Vielzahl von Motoren, so auch Brennkraftmaschinen mit Aufladung, möglich. Darüber hinaus wird die Schaltqualität auch durch die Betriebstemperatur, die Fertigungstoleranzen und den Abnutzungsgrad des Antriebs nicht beeinflußt.

Während bei bisher bekannten Lastschaltgetrieben die Realisierung von Gruppengetrieben kaum möglich ist, da die gleichzeitige Umschaltung von wenigstens zwei Reibelementen je Gruppe bei einem Umschaltvorgang technisch kaum beherrschbar ist, wird dies durch die gleichzeitige Regelung des Motors, des Hauptdrucks und der Gangschaltventile möglich. Darüber hinaus kann ein Gruppengetriebe mit einer erfindungsgemäßen Gangwechselvorrichtung in kleinerer Bauweise erstellt werden, was zu geringeren Fertigungskosten und geringerem Gewicht führt. Dies bedeutet, daß gegenüber dem Stand der Technik auch die Realisierung von Lastschaltgetrieben in Gruppenbauweise für Schwerlastfahrzeuge möglich wird, wobei für die Anwendung bei Schwerlastfahrzeugen noch von besonderem Vorteil ist, daß der Umschaltvorgang unabhängig von der Beladung des Fahrzeuges oder der jeweiligen Steigung der Fahrbahn ist.

Durch die in den Unteransprüchen aufgeführten Maßnahmen sind vorteilhafte Weiterbildungen und Verbesserungen der im Hauptanspruch angegebenen Gangwechselvorrichtung möglich.

Besonders vorteilhaft ist es, den Umschaltvorgang durch einen Schaltbefehl einzuleiten und dann zu beenden, wenn entweder der Synhronlauf des Stufenwechselgetriebes erreicht ist oder wenn die erste zeitliche Ableitung der Getriebeausgangsdrehzahl bei Hochschaltvorgängen einen vorgebbaren Wert unterschreitet oder bei Rückschaltvorgängen einen vorgebbaren Wert überschreitet oder wenn seit Einleitung des Umschaltvorganges eine vorgebbare Zeit verstrichen ist. Im ersten Fall wird bei Synchronlauf weich geschaltet, im zweiten Fall wird durch Zwangsynchronisierung die kinetische Motorenergie in Grenzfällen beispielsweise bei großen Steigungen, ausgenutzt, im dritten und vierten Fall wird die Umschaltzeit ebenfalls durch Zwangsynchronisierung begrenzt. Hierdurch wird der Verschleiß der Kupplungen und Bremsen im Stufengetriebe stark vermindert und ein Verheizen der Kupplungselemente durch zu lange Umschaltzeiten verhindert.

Eine besonders gute Wirkung wird dadurch erzielt, daß der Schaltbefehl bei Vorliegen von Vollast und starker Abnahme der Fahrzeuggeschwindigkeit unterdrückt wird, da dadurch nicht sinnvolle Schaltvorgänge verhindert werden und somit der Getriebeverschließ weiter herabgesetzt wird.

Weiterhin ist es besonders vorteilhaft, das Ausgangssignal der dem Antriebsmotor zugeordneten Energieträgerzumessungsvorrichtung, beispielsweise der Einspritzpumpe der Brennkraftmaschine, bei Einleitung eines Umschaltvorganges auf seinen Augenblickswert zu verrasten. Hierdurch wird ein konstanter Hauptdruck im Getriebe während des Umschaltvorganges erreicht und Störungen des Umschaltvorganges, etwa durch Auslösung eines neues Umschaltvorganges während eines laufenden Umschaltvorganges, verhindert. Weiterhin ist es von Vorteil, den Hauptdruck bei Nichtvorliegen eines Umschaltvorganges, auf einen ersten, auf den zur Übertragung des jeweiligen Drehmomentes erforderlichen Hauptdruckwert bezogener Hauptdruckwert einzustellen und bei Einleitung eines Lasthoch- oder Schubrückschaltvorganges auf einen zweiten, und bei Einleitung eines Schubhoch- oder Lastrückschaltvorganges auf einen dritten bezogenen Hauptdruckwert abzusenken. Während man bei den ersten beiden Schaltarten in vorteilhafter Weise den Hauptdruck auf den zur Übertragung des jeweiligen Drehmomentes erforderlichen Wert absenkt, wodurch Drehmomentspitzen durch Schlupf im Getriebe abgefangen werden, senkt man den Hauptdruck in den letzten beiden Schalt-Betriebsfällen in vorteilhafter Weise auf einen geringeren Wert, ohne jedoch wie bei bekannten Lösungen den Abtriebsstrang plötzlich voll zu entlasten. Auf diese Weise können Torsionsschwingungen im Abtrieb wirkungsvoll gedämpft werden.

Schließlich ist es von Vorteil, die Betätigung der Gangschaltventile bei Lasthochschaltung bzw. Schubrückschaltung mit der Einleitung des Umschaltvorganges vorzunehmen und bei Schubhochschaltung bzw. Lastrückschaltung mit dem Ende des Umschaltvorganges. Durch gleichzeitige Absenkung des Hauptdruckes auf etwa den zur Übertragung des Drehmomentes notwendigen Wert im neuen Gang in den ersten beiden Fällen wird eine wirksame Unterdrückung von Drehmomentspitzen erreicht, wobei bei der Lasthochschaltung zusätzlich die Möglichkeit zur Zwangssynchronisierung bei zu stark abfallender Fahrzeuggeschwindigkeit besteht, während die Absenkung des Hauptdruckes auf einen wesentlich niedrigeren Wert im alten Gang in den letzten beiden Fällen Drehschwingungen im Abtrieb verhindert.

Zeichnung

Das Prinzipschaltbild einer Ausführungsform einer erfindungsgemäßen Gangwechseleinrichtung sowie einige Schaltdiagramme sind in der Zeichnung dargestellt und in der nachfolgenden Beschreibung näher erläutert. Es zeigen

Fig. 1: das Prinzipschaltbild einer Ausführungsform einer erfindungsgemäßen Gangwechseleinrichtung;

Fig. 2 den zeitlichen Verlauf einiger Schaltsignale und Betriebsparameter aus dem in Fig. 1 dargestellten Prinzipschaltbild für eine Lasthochschaltung;

Fig. 3 die in Fig. 2 dargestellten Signalverläufe für eine Schubhochschaltung;

Fig. 4 die in Fig. 2 dargestellten Signalverläufe für eine Lastrückschaltung;

Fig. 5 die in Fig. 2 dargestellten Signalverläufe für eine Schubrückschaltung;

Fig. 6 das Prinzipschaltbild einer Ausführungsform einer Verriegelungsstufe zur Verwendung in der in Fig. 1 dargestellten Gangwechseleinrichtung;

Fig. 7 Schaltbilder von Ausführungsformen eines Flipflops, einer Zwangssynchronisierungseinrichtung eines Zeitgliedes und eines Komparators zur Verwendung in der in Fig. 1 dargestellten Gangwechseleinrichtung;

Fig. 8 Schaltbilder von Ausführungsformen einer Schuberkennungseinheit und einer Auswahleinheit zur Verwendung in der in Fig. 1 dargestellten Gangwechseleinrichtung;

Fig. 9 Schaltbilder von Ausführungsformen eines Reglers und zweier Umschalter zur Verwendung in der in Fig. 1 dargestellten Gangwechseleinrichtung;

Fig. 10 das Schaltbilde einer Ausführungsform einer Sample-and-Hold-Einheit zur Verwendung in der in Fig. 1 dargestellten Gangwechseleinrichtung;

Fig. 11 das Schaltbild einer Ausführungsform einer Druckstufenschaltung zur Verwendung in der in Fig. 1 dargestellten Gangwechseleinrichtung.

Beschreibung der Erfindung

Die erfindungsgemäße Gangwechseleinrichtung dient zur Steuerung eines Stufengetriebes, das das Drehmoment eines Antriebsmotors auf einen Abtrieb überträgt. Vorzugsweise ist dabei die Anwendung in einem Kraftfahrzeug mit Dieselmotor, elektronisch geregelter Einspritzpumpe und einem automatischen mehrgängigen Planetengetriebe von allgemeinem Standard vorgesehen. Die erfindungsgemäße Gangwechselvorrichtung ist jedoch keineswegs auf diesen Anwendungsfall beschränkt, sondern eignet sich ebenso zur Anwendung bei anderen Antriebsarten, beispielsweise Otto-Motoren, Gasturbinen und Elektromotoren, bei denen die Regelung der Motordrehzahl durch elektronische Mittel üblich und ein vielgängiges Getriebe erforderlich ist.

Zur Regelung des Drehmomentüberganges beim Gangwechsel geht die erfindungsgemäße Gangwechselvorrichtung von folgenden wesentlichen Erfindungsgedanken aus:

1. Der Motor wird während des Gangwechsels nicht mehr vom Fahrpedal gesteuert, sondern von einem Regler in seiner Drehzahl auf einen vorgegebenen Drehzahlgradienten bis zum Erreichen eines Synchronsignales geregelt.

2. Es werden die verschiedenen Schaltfälle (Hoch/Rück- und Last/Schubschaltungen) erfaßt.

3. In Abhängigkeit vom jeweiligen Schaltfall werden die Schaltpunkte der Gangschaltventile festgelegt.

4. Der Hauptdruck des Stufengetriebes wird in Abhängigkeit vom jeweiligen Schaltfall eingestellt.

Durch die in den Unteransprüchen aufgeführten Maßnahmen werden folgende weitere Gedanken verwirklicht:

5. Der Synchronpunkt zwischen Motordrehzahl und angepaßter Getriebausgangsdrehzahl wird elektronisch erfaßt und ein Synchronsignal bei für Hoch- und Rückschaltvorgängen getrennt einstellbarem Vorhalt ausgelöst.

4

6. Es wird jeweils das dem neuen Gang zugeordnete Gangschaltventil vor dem dem alten Gang zugeordneten Gangschaltventil betätigt.

7. Der Hauptdruck wird während des Gangwechsels von seinem Betriebswert auf einen niedrigeren, während des Gangwechsels konstanten Wert in einem festen Verhältnis abgesenkt.

Für den Betrieb der erfindungsgemäßen Gangwechselvorrichtung müssen eine Reihe von Betriebsgrößen verarbeitet werden. Im Falle eines von einer mit einer Einspritzpumpe ausgerüsteten Brennkraftmaschine angetriebenen Kraftfahrzeuges sind dies zunächst die Motordrehzahl und die Getriebeausgangsdrehzahl, die in bekannter Weise durch Drehzahlgeber, beispielsweise induktive Zahnscheibengeber gewonnen werden können. Ferner werden die Umschaltsignale einer Gangwahleinrichtung verarbeitet, wobei jeweils zwei Informationen vorliegen müssen, nämlich ein Schaltbefehl (S) und eine Information darüber, ob hoch- oder rückgeschaltet werden soll (RH). Die Gangwahleinrichtung wird dabei in der Regel als Halb- oder Vollautomat ausgebildet sein, wobei die Ermittlung der Schaltpunkte, d.h. das Schaltmuster sowie die erforderlichen Sicherheitsvorrichtungen gegen Fehlschaltungen nicht Gegenstand dieser Erfindung sind. Schließlich werden als Betriebsgrößen noch die Kennlinien des Fahrpedals, der Einspritzpumpe, der Gangschaltventile und des Hauptdruckreglers benötigt, wobei die Ermittlung und Verarbeitung dieser Betriebsgrößen ebenfalls Stand der Technik und nicht Gegenstand der vorliegenden Erfindung sind.

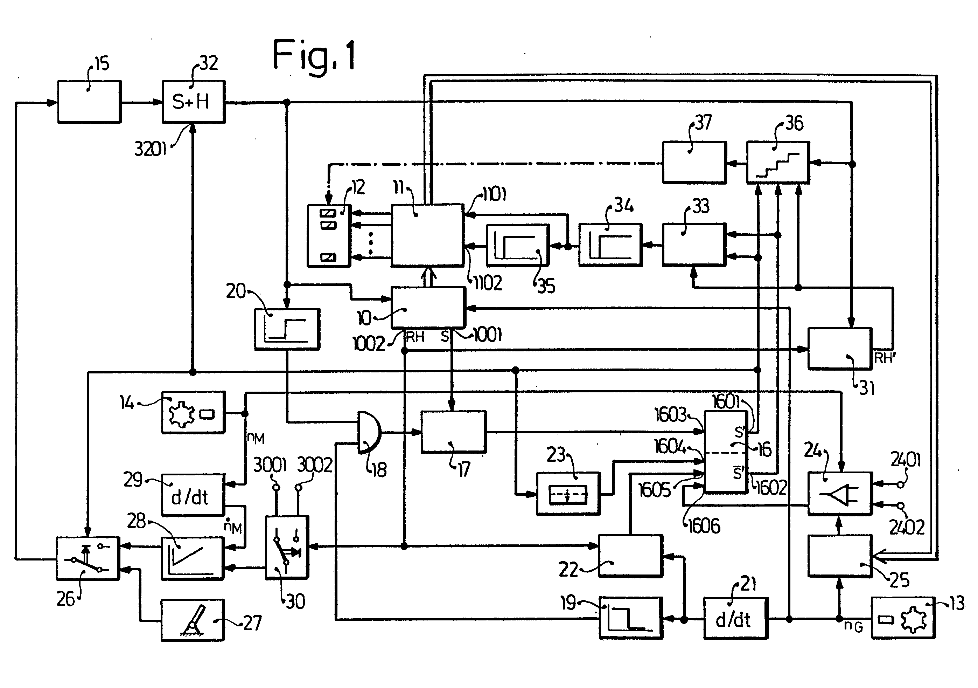

In Fig. 1 ist das Blockschaltbild einer Ausführungsform einer erfindungsgemäßen Gangwechseleinrichtung dargestellt.

Eine Gangwahleinrichtung 10 mit einem Schaltbefehl-Ausgang 1001 und einem Hoch/Rückschalt-Informationsausgang 1002 steht in Wirkungsverbindung mit einer Dekodierstufe 11, die an Gangschaltventile 12 angeschlossen ist. Eingangsseitig zur Gangwechseleinrichtung sind ein Getriebeausgangsdrehzahl-Geber 13, ein Motordrehzahl-Geber 14 und eine Energieträgerzumessungsvorrichtung 15 vorgesehen. Die Dekodierstufe 11 wird, wie weiter unten im einzelnen beschrieben, von einem Flipflop 16 gesteuert, das einen Ausgang 1601, einen komplementären Ausgang 1602, einen Setzeingang 1603 sowie Rücksetzeingänge 1604, 1605, 1606 aufweist. Der Setzeingang 1603 des Flipflops 16 ist über eine Verriegelungsstufe 17 an den Schaltbefehl-Ausgang 1001 der Gangwahleinrichtung 10 angeschlossen. Die Verriegelungsstufe 17 wird von einem UND-Gatter 18 gesteuert, das eingangsseitig mit Schwellwertstufen 19, 20 verbunden ist. Die Schwellwertstufe 19 ist über eine Differenzierstufe 21 an den Getriebeausgangsdrehzahl-Geber 13, die Schwellwertstufe 20 ist direkt an die Energieträgerzumessungsvorrichtung 15 bzw. eine ihr gegebenenfalls nachgeschaltete Sample und Hold-Einheit 32 angeschlossen. Der Ausgang der Differenzierstufe 21 und der Hoch/Rückschalt-Informationsausgang 1002 der Gangwahleinrichtung 10 sind auf eine Zwangssynchronisierungseinrichtung 22 geführt, deren Ausgang auf den ersten Rücksetzeingang 1604 des Flipflops 16 gelegt ist. Der zweite Rücksetzeingang 1605 des Flipflops 16 ist über ein Zeitglied 23 mit dem Ausgang 1601 verbunden. Der dritte Rücksetzeingang 1606 des Flipflops 16 wird schließlich von einem Komparator 24 angesteuert. Der Komparator 24 weist zwei Klemmen 2401, 2402 auf und ist eingangsseitig mit dem Motordrehzahl-Geber 14 und einer Wichtungsstufe 25 verbunden, die an den Ausgang des Getriebeausgangsdrehzahl-Gebers 13 angeschlossen ist und mit der Dekodierstufe 11 in Wirkungsverbindung steht.

Die Energieträgerzumessungsvorrichtung ist über einen Umschalter 26 entweder an einen Sollwertgeber 27 oder einen Regler 28 anschließbar. Der Steuereingang des Umschalters 26 ist mit dem Ausgang 1601 des Flipflops 16 verbunden. Der Regler 28 steht eingangsseitig über eine Differenzierstufe 29 mit dem Motordrehzahl-Geber 14 in Verbindung und ist zusätzlich über einen Umschalter 30 an Klemmen 3001, 3002 anschließbar, wobei der Steuereingang des Umschalters 30 mit dem Hoch/Rückschalt-Informationsausgang 1002 der Gangwahleinrichtung 10 in Wirkungsverbindung steht. An den Hoch/Rückschalt-Informationsausgang 1002 der Gangwahleinrichtung 10 ist weiterhin eine Schuberkennungseinheit 31 angeschlossen, die zudem über die Sample-and-Hold-Einheit 32, die der Energieträgerzumessungsvorrichtung 15 nachgeschaltet ist, angesteuert wird. Der Hold-Eingang 3201 der Sample-and-Hold-Einheit 32 wird dabei vom Ausgang 1601 des Flipflops 16 gesteuert. Der Ausgang der Schuberkennungseinheit 31 ist auf eine Auswahleinheit 33 geführt, die zusätzlich mit den Ausgängen 1601, 1602 des Flipflops 16 verbunden ist. Die Auswahleinheit 33 steht über ein Totzeitglied 34 mit einem Steuereingang 1101 der Dekodierstufe 11 sowie über das Totzeitglied 34 und ein weiteres Totzeitglied 35 mit einem weiteren Steuereingang 1102 der Dekodierstufe 11 in Verbindung. Der Ausgang der Sample-and-Hold-Einheit 32, der Schuberkennungseinheit 31 sowie die Ausgänge 1601, 1602 des Flipflops 16 sind ferner auf eine Druckstufenschaltung 36 geführt, die einen Hauptdruckregler 37 ansteuert, der seinerseits mit den Gangschaltventilen 12 in Wirkungsverbindung steht.

Die Funktionsweise der in Fig. 1 dargestellten Vorrichtung ist wie folgt:

Die Gangwahleinrichtung 10 liefert an ihrem Schaltbefehl-Ausgang 1001 einen Schaltbefehl und an ihrem Hoch/Rückschalt-Informationsausgang 1002 eine Information darüber ob hoch- oder rückgeschaltet werden soll. Führt man die in Fig. 1 dargestellte Vorrichtung in digitaler Schaltungstechnik aus, würde beispielsweise ein Schalbefehl S = 1 bedeuten, daß geschaltet werden soll und S = 0, das nicht geschaltet werden soll. Entsprechend könnte ein Hoch/Rückschalt-Signal RH = 1 bedeuten, das hochgeschaltet werden soll und entsprechend RH = 0, das rückgeschaltet werden soll.

Der Schaltbefehl S gelangt über die Verriegelungsstufe 17 auf den Setzeingang 1603 des Flipflops 16. In der Verriegelungsstufe 17 sollen solche Schaltvorgänge unterdrückt werden, deren Ausführung bei den vorliegenden Betriebsbedingungen des Kraftfahrzeuges nicht sinnvoll ist. Dies ist vor allem dann der Fall, wenn die Vollastschwelle des Motors erreicht ist und die Fahrzeugbeschleunigung stark abnimmt. Entsprechend wird das Ausgangssignal der Energieträgerzumessungsvorrichtung 15, beispielsweise eine Einspritzpumpe auf die Schwellwertstufe 20 geführt, die so eingestellt ist, daß bei Vollast ein positives logische Signal abgegeben wird. Andererseits wird die am Ausgang der Differenzierstufe 21 anliegende erste zeitliche Ableitung der Getriebeausgangsdrehzahl $n_G$, die der Fahrzeugbeschleunigung entspricht, der Schwellwertstufe 19 zugeführt, die so geschaltet ist, daß unterhalb eines einstellbaren Schwellwertes ein positives logisches Signal abgegeben wird. Die Ausgangssignale der Schwellwertstufen 19, 20 werden im UND-Gatter 18 konjunktiv verknüpft und dienen zur Steuerung der Verriegelungsstufe 17, so daß der Schaltbefehl S im oben beschriebenen Betriebsfall nicht von der Verriegelungsstufe 17 auf das Flip-flop 16 weitergeleitet wird.

Gelangt der Schaltbefehl S jedoch auf das Flipflop 16, wird dieses gesetzt und am Ausgang 1601 erscheint ein modifizierter Schaltbefehl S', der, wie weiterhin im einzelnen beschrieben, zur Ansteuerung der Dekodierstufe 11 dient. Die Dekodierstufe 11, die mit der Gangwahleinrichtung 10 in Wirkverbindung steht, dient zur Auswahl der bei dem jeweiligen Umschaltvorgang zu betätigenden Gangschaltventile 12 und stellt insbesondere die Ansteuerung des dem alten Gang und des dem neuen Gang zugeordneten Gangschaltventils durch die Ausgänge 1601, 1602 des Flipflops 16 her. Tritt ein modifizierter Schaltbefehl S' am Ausgang 1601 des Flipflops 16 auf, wird der Umschaltvorgang eingeleitet.

Zur Beendigung eines Umschaltvorganges muß einer der Rücksetzeingänge 1604, 1605, 1606 des Flipflops 16 angesteuert werden. Im Normalfalle wird dies durch Ansteuerung des dritten Rücksetzeinganges 1606 vom Komparator 24 bewirkt. Der Komparator 24 dient zur Feststellung des Synchronlaufes zwischen Motordrehzahl und angepaßter Getriebeausgangsdrehzahl. Hierzu wird ihm einerseits ein der Motordrehzahl $n_M$ entsprechendes Signal vom Motordrehzahl-Geber 14 und andereseits ein der Getriebeausgangsdrehzahl $n_G$ entsprechendes Signal vom Getriebeausgangsdrehzahl-Geber 13 zugeleitet. Die Getriebeausgangsdrehzahl $n_G$ muß dabei entsprechend dem eingestellten Übersetzungsverhältnis des Stufengetriebes gewichtet werden. Hierzu wird das der Getriebeausgangsdrehzahl $n_G$ entsprechende Signal in einer Wichtungsstufe 25 bewertet und dem Komparator 24 das gewichtete Signal $n'_G$ zugeleitet. Zur Wichtung des der Getriebeausgangsdrehzahl $n_G$ entsprechenden Signales ist es beispielsweise möglich, in Abhängigkeit von der Dekodierstufe 11 das Ausgangssignal des Getriebeausgangsdrehzahl-Gebers 13 entsprechend dem jeweils einzulegenden Gang herunterzuteilen. Zur Herbeiführung eines weichen Schalt-überganges ist es sinnvoll, den Schaltvorgang nicht exakt im Synchronpunkt, sondern bei einem etwas vorgehalten Wert, d.h. bei geringer Last, zu beenden. Hierzu ist dem Komparator 24 über die Klemmen 2401 und 2402 eine Schwellwertspannung zuführbar, die dem Synchronvorhalt bei Hoch- und Rückschaltvorgängen entspricht. Erreicht nun die Differenz zwischen gewichteter Getriebeausgangsdrehzahl $n'_G$ und Motordrehzahl $n_M$ bei Hochschaltvorgängen den dem Hochschalten entsprechenden Vorhalt bzw. bei Rückschaltvorgängen den dem Rückschalten entsprechenden Vorhalt gegenüber dem Synchronpunkt, tritt am Ausgang des Komparators 24 ein positives logisches Signal auf und das Flipflop 16 wird zurückgesetzt. Hierdurch erscheint am komplementären Ausgang 1602 des Flipflops 16 ein komplementäres modifiziertes Schaltsignal S' und der Schaltvorgang wird beendet. Neben dem dritten Rücksetzeingang 1606 des Flipflops 16, der für den normalen Fahrbetrieb vorgesehen ist, sind weiterhin die Rücksetzeingänge 1604, 1605 vorgesehen, die eine zeitliche Begrenzung des Umschaltvorganges bewirken und damit einen unzulässig hohen Verschleiß der Kupplungen im Stufengetriebe verhindern. Dabei wird der erste Rücksetzeingang 1604 von der Zwangssynchronisierungseinrichtung 22 angesteuert, die die Hoch/Rückschalt-Information RH und die erste zeitliche Ableitung der Getriebeausgangsdrehzahl $n_G$, entsprechend der Fahrzeugbeschleunigung verarbeitet. Die Zwangssynchronisierungseinrichtung 22 steuert dann den ersten Rücksetzeingang 1604 des Flipflops 16 an, wenn entweder bei Hochschaltvorgängen die Fahrzeugbeschleunigung zu gering oder bei Rückschaltvorgängen die Fahrzeugbeschleunigung zu hoch wird. Der erste Fall betrifft die seltenen Hochschaltungen an extrem steilen Berg, bei denen es darauf ankommt, die kinetische Energie der drehenden Massen von Motor und Getriebe für den Vollzug des Schaltvorganges noch auszunutzen. Dann wird unter Inkaufnahme einer Minderung der Güte der Schaltqualität die Schaltung vor dem eigentlichen Synchronpunkt erzwungen, um ein Abwürgen des Motors am Berg zu verhindern, das eintreten würde, da die Getriebeausgangsdrehzahl so stark absinkt, daß der Synchronpunkt nicht mehr erreicht werden kann. Im zweiten Fall soll verhindert werden, daß bei Rückschaltvorgängen der Motor überdreht wird, wenn beispielsweise bei starkem Gefälle die Fahrzeuggeschwindigkeit zu hoch wird. Dieses Kriterium kann alternativ oder ergänzend zu einer bereits vorhandenen Überdrehsicherung des Antriebsmotors verwendet werden. Schließlich wird durch Ansteuerung des zweiten Rücksetzeinganges 1605 des Flipflops 16 der Umschaltvorgang dann beendet, wenn seit Einleitung des Umschaltvorganges eine vorbestimmte Zeit verstrichen ist. Hierzu wird das Zeitglied 23 vom modifizierten Schaltsignal S' angestoßen und steuert nach einer vorbestimmten Zeit den zweiten Rücksetzeinang 1605 des Flipflops 16 an. Hierdurch ist dafür gesorgt, daß der Umschaltvorgang in jedem Fall, auch bei Vorliegen einer Störung im System nach einer bestimmten Maximalzeit beendet wird.

Weiterhin weist die in Fig. 1 dargestellte Vorrichtung erste Schaltmittel 26 bis 30 zur Motorregelung beim gangwechsel zweite Schaltmittel 31 zur Bestimmung der den jeweiligen Betriebsfalle entsprechenden Schaltart beim Gangwechsel, dritte Schaltmittel 33, 34, 35 zur Festlegung des Schaltpunktes der Gangschaltventile 12 beim Gangwechsel sowie vierte Schaltmittel 36, 37 zur Einstellung des Hauptdrucks im Stufengetriebe beim Gangwechsel auf.

Der Umschalter 26 verbindet im normalen Fahrbetrieb die Energieträgerzumessungsvorrichtung 15 mit dem Sollwertgeber 27, beispielsweise einem Fahrpedal. Tritt jedoch am Ausgang 1601 des Flipflops 16 ein modifizierte Schaltbefehl S' auf, wird der Umschalter 26 angesteuert und der Eingang der Energieträgerzumessungsvorrichtung 15 vom Sollwertgeber 27 auf den Ausgang des Reglers 28 umgeschaltet. Das bedeutet, daß der Antriebsmotor über die Energieträgerzumessungsvorrichtung 15 während des Gangwechsels dem Einfluß des Fahrers entzogen ist und in seinem Verhalten von dem Regler 28 bestimmt wird. Der Regler 28 verarbeitet eingangsseitig ein der ersten zeitlichen Ableitung der Motordrehzahl $n_M$ entsprechendes Signal sowie einen über die Klemmen 3001, 3002 des Umschalters 30 zuschaltbaren Sollwert. Der Umschalter 30 wird dabei in Abhängigkeit von der Hoch/Rückschalt-Information RH betätigt. Beispielsweise kann dem Regler 28 über die Klemme 3001 ein Drehzahlgradientensollwert für den Rückschaltvorgang und über die Klemme 3002 ein Drehzahlgradientensollwert für den Hochschaltvorgang zugeführt werden. Ist die Hoch/Rückschalt-Information RH = 1, ist der Regler 28 mit der Klemme 3002 verbunden und die Motordrehzahl wird entsprechend dem vorgegebenen Motordrehzahlgradienten, der beim Hochschaltvorgang negativ ist, heruntergeregelt. Der Regler 28 ist dabei zweckmäßigerweise als PI-Regler ausgebildet, es sind selbstverständlich aber auch andere Reglerarten verwendbar. Erst wenn der modifizierte Schaltbefehl S' am Ausgang 1601 des Flipflops 16 verschwindet, entsprechend dem Ende des Umschaltvorganges, kehrt der Umschalter 26 wieder in seine Ausgangsstellung zurück und verbindet den Eingang der Energieträgerzumessungsvorrichtung 15 wieder mit dem Sollwertgeber 27.

Die Schuberkennungseinheit 31 hat die Funktion, eine Information, beispielsweise für die Elemente 33, 36 bereitzustellen, die eine Aussage über den jeweiligen Betriebszustand, d.h. Lasthoch-, Schubhoch-, Lastrück- oder Schubrückschaltung macht. Hierzu wird die Hoch/Rückschalt-Information RH von der Schuberkennungseinheit 31 im Lastbetrieb unverändert weitergegeben, während sie im Schubbetrieb invertiert wird. Das Ausgangssignal der Schuberkennungseinheit 31 sei mit RH' bezeichnet, wobei gilt: RH' = RH (Lastbetrieb); RH' = $\overline{RH}$ (Schubbetrieb). Um festzustellen, ob Schubbetrieb vorliegt, ist die Schuberkennungseinheit 31 mit der Energieträgerzumessungsvorrichtung 15 verbunden.

Die Auswahleinheit 33 steuert den Schaltpunkt der Gangschaltventile 12. Erfindungsgemäß werden die Gangschaltventile 12 bei Lasthochschaltung und Schubrückschaltung mit der Einleitung des Umschaltvorganges und bei Schubhochschaltung und Lastrückschaltung mit dem Ende des Umschaltvorganges angesteuert. Die modifizierte Hoch/Rückschalt-Information RH' ist bei Lasthochschaltung und Schubrückschaltung = 1 und bei Schubhochschaltung und Lastrückschaltung = 0. In Abhängigkeit von der modifizierten Hoch/Rückschalt-Information RH' kann also die Ansteuerung der Gangschaltventile 12 in der Auswahleinheit 33 entweder mit dem modifizierten Schaltbefehl S', entsprechend der Einleitung des Umschaltvorganges, oder mit dem negierten modifizierten Schaltbefehl $\overline{S'}$, entsprechend dem Ende des Umschaltvorganges, eingeleitet werden. Die Dekodierstufe 11 sorgt dabei dafür, daß mit dem Steuereingang 1101 das dem neuen Gang zugeordnete Gangschaltventil und mit dem Steuereingang 1102 das dem alten Gang zugeordnete Gangschaltventil betätigt werden kann. Das von der Auswahleinheit 33 kommende Ansteuersignal für die Gangschaltventile 12 wird zunächst im Totzeitglied 34 verzögert und löst dann über den Steuereingang 1101 das dem neuen Gang zugeordnete Gangschaltventil aus. Nach einer weiteren, durch das Totzeitglied 35 bestimmten Verzögerungszeit wird über den Steuereingang 1102 das dem alten Gang entsprechende Gangschaltventil betätigt.

Da gleichzeitig mit dem die Gangschaltventile 12 auslösenden modifizierten Schaltbefehl S' bzw. $\overline{S'}$ der Hauptdruck des Stufengetriebes umgeschaltet wird, ist die durch das Totzeitglied 34 bestimmte erste Totzeit vorgesehen, um eine Einstellung des Hauptdruckes im Stufengetriebe zu ermöglichen, bevor der neue Gang zugeschaltet wird. Die durch das Totzeitglied 35 bestimmte zweite Totzeit sorgt dafür, daß das dem alten Gang zugeordnete Gangschaltventil nach dem dem neuen Gang zugeordnete Gangschaltventil betätigt wird. Durch diese positive Überschneidungssteuerung der Gangschaltventile 12 wird eine Zugkraftunterbrechung im Getriebe vermieden.

Die Druckstufenschaltung 36 bildet aus den modifizierten Schaltbefehlen S', $\overline{S'}$, der modifizierten Hoch/Rückschalt-Information RH' sowie dem Ausgangssignal der Energieträgerzumessungsvorrichtung 15 bzw. der Sample-and-Hold-Einheit 32 eine Stellgröße für den Hauptdruckregler 37 des Stufengetriebes, die die Kraft zur Betätigung der beim Umschalten von einem Gang in einen anderen Gang erforderlichen Getriebeteile bestimmt. Die Druckstufenschaltung 36 erkennt die Betriebsfälle: Kein Schalten, Lasthoch-, Schubhoch-, Lastrück- und Schubrückschaltung und stellt für den normalen Fahrbetrieb sowie für die Zeit des Gangwechsels über den Hauptdruckregler 37 einen geeigneten Hauptdruck im Stufengetriebe ein. Die Druckstufenschaltung 36 wichtet dabei das Ausgangssignal der Energieträgerzumessungsvorrichtung 15 bzw. der Sample-and-Hold-Einheit 32, so daß dem Hauptdruckregler 37 ein Signal zugeführt wird, das im Stufengetriebe einen Hauptdruck entstehen läßt, der gegenüber dem zum Übertragen des jeweils vorliegenden Drehmomentes erforderlichen Druck um einen vorgegebenen Faktor angehoben oder abgesenkt ist. Stellt man beispielsweise für den normalen Fahrbetrieb ohne Gangwechsel in der Druckstufenschaltung 36 einen Faktor 1, 5 ein, bedeutet dies, daß im Stufengetriebe ein Hauptdruck herrscht, der 150% des zum Übertragen des gerade vorliegenden Drehmomentes erforderlichen Druckes entspricht. Damit ist eine sichere Übertragung des von der Energieträgerzumessungsvorrichtung 15 vorgegebenen Drehmomentes gewährleistet und kleine Drehmomentspitzen führen nicht zu Schlupferscheinungen und damit einer Abnutzung des Getriebes sowie einer Minderung des Fahrkomforts.

In entsprechender Weise ist es möglich, wie weiter unten gezeigt wird, beispielsweise für Lasthoch- und Schubrückschaltungen in der Druckstufenschaltunge einen Faktor 1,0 sowie für Lastrück- und Schubhochschaltungen einen Faktor 0,3 einzustellen. Da vom Umschaltvorgang her Lasthochschaltungen und Schubrückschaltungen einerseits sowie Lastrückschaltungen und Schubhochschaltungen andererseits äquivalent sind, genügt es, wie bei der Steuerung der Auswahleinheit 33 festzustellen ob diese oder jene vorliegen, wofür die modifizierte Hoch/Rückschalt-Information RH' ein Kriterium liefert. Die Absenkung des Hauptdruckes von dem Sicherheitswert, beispielsweise 150%, beginnt mit der Einleitung des Umschaltvorganges, entsprechend dem Auftreten des modifizierten Schaltbefehls S' und endet mit der Beendigung des Umschaltvorganges, entsprechend dem Auftreten des modifizierten Schaltbefehls S'.

Bei Hochschaltungen muß der Antriebsmotor abgebremst und bei Rückschaltungen beschleunigt werden, um einen Synchronlauf des Stufengetriebes zu erreichen. Hierzu wird der Antriebsmotor durch Einstellung der Druckstufenschaltung 36 auf einen hohen oder niedrigen Wert be- oder entlastet. Der höhere Wert der Druckstufenschaltung 36 für Hochschaltungen beträgt beispielsweise 1,0 gegenüber dem zum Übertragen des jeweiligen Drehmomentes erforderlichen Wertes. Bei Rückschaltungen wird bei den heute üblichen Vorrichtungen der Motor im allgemeinen voll entlastet. Dies hat jedoch den Nachteil, daß Torsionsschwingungen im Abtrieb auftreten können. Um dies zu vermeiden, bzw. um Torsionsschwingungen in ausreichendem Maße dämpfen zu können, wird daher in diesem Betriebsfall in der Druckstufenschaltung 36 ein geringer, jedoch endlicher Wert, beispielsweise 0,3 eingestellt. In Abhängigkeit von Schub- und Lastbetrieb ergeben sich damit die folgenden vier Betriebsarten:

a.) Lasthochschaltung: Antriebsmotor soll abgebremst werden; durch einen hohen Druckwert (1,0) wird bei Lastbetrieb die Drehzahl gedrückt, da der Antriebsmotor belastet wird.

b.) Lastrückschaltung: Antriebsmotor soll beschleunigt werden; durch einen niedrigen Druckwert (0,3) wird bei Lastbetrieb die Drehzahl erhöht, da der Antriebsmotor nur wenig belastet wird.

c.) Schubhochschaltung: Antriebsmotor soll abgebremst werden; durch einen niedrigen Druckwert (0,3) wird bei Schubbetrieb die Drehzahl gedrückt, da durch die Momentenumkehr vom Antriebsmotor zum Stufengetriebe der Antriebsmotor belastet wird.

d.) Schubrückschaltung: Antriebsmotor soll beschleunigt werden; durch einen hohen Druckwert (1,0) wird bei Schubbetrieb die Drehzahl erhöht, da durch die Momentenumkehr von Antriebsmotor zum Stufengetriebe der Antriebsmotor nur wenig belastet wird.

Es ist daher mit der erfindungsgemäßen Vorrichtung möglich, auf überraschend einfache Weise durch Einstellung des bezogenen Druckes in drei Stufen eine allen Schaltvorgängen gerechte Drucksteuerung zu erzielen. Hierdurch werden die in Eingriff kommenden Getriebeteile geschont, deren Verschleiß vermindert und der Fahrkomfort erheblich erhöht, da der Schaltvorgang gegenüber bekannten Vorrichtungen wesentlich weicher abläuft.

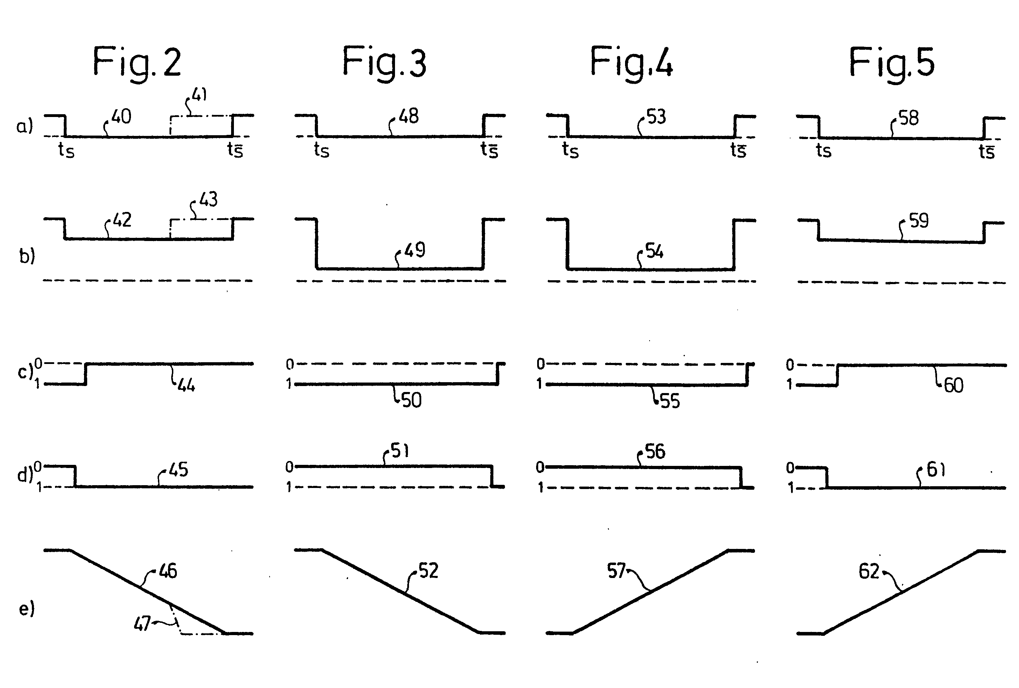

In Fig. 2 ist der zeitliche Verlauf des Schaltsignales, des Hauptdruckes, der Ansteuerung des dem alten Gang zugeordneten Gangschaltventiles, der Ansteuerung des dem neuen Gang zugeordneten Gangschaltventiles und der Motordrehzahl für den Betriebsfall der Lasthochschaltung dargestellt. Die Fig. 3, 4 und 5 zeigen die entsprechenden zeitlichen Verläufe für die Betriebsfälle der Schubhochschaltung, der Lastrückschaltung und der Schubrückschaltung.

Fig. 2a zeigt einen Schaltsignalverlauf 40 während eines Gangwechsels. Zum Zeitpunkt $t_s$ springt der Schaltsignalverlauf 40 auf einen neuen Wert, der dem Beginn des Umschaltvorganges entspricht. Zum Zeitpunkt $t_{\bar{s}}$ springt der Schaltsignalverlauf 40 wieder auf den alten Wert, der Umschaltvorgang ist beendet. Der eingezeichnete Schaltsignalverlauf 41 stellt den Fall dar, bei dem durch die Zwangssynchronisierungseinrichtung 22 vor Erreichen des Synchronpunktes der Schaltvorgang durch Rücksetzen des Flipflops 16 beendet wurde. Entsprechend zu den Schaltsignalverläufen 40, 41 verhalten sich die Hauptdruckverläufe 42, 43 in Fig. 2 für normalen Gangwechsel und für den zwangssynchronisierten Gangwechsel. Zum Zeitpunkt $t_{\bar{s}}$ wird der Hauptdruck von einem Sicherheitswert, beispielsweise 150% auf einen niedrigeren Wert, beispielsweise 100%, bezogen auf den zum Übertragen des jeweiligen Drehmomentes erforderlichen Hauptdruckwert, abgesenkt. Damit kann das Nenndrehmoment übertragen werden, während Drehmomentspitzen durch Schlupf im Stufengetriebe aufgefangen werden.

**0 001 298**

Zum Zeitpunkt $t_{\bar{s}}$ wird der Hauptdruck, der durch die Sample-and-Hold-Einheit 32 während des gesamten Umschaltvorganges konstant gehalten wurde, wieder auf seinen Sicherheitswert gebracht. Wird der Umschaltvorgang durch die Zwangssynchronisierungseinrichtung 22 vor Erreichen des Synchronpunktes abgebrochen, entsteht entsprechend dem Schaltsignalverlauf 41 ein Hauptdruckverlauf 43. Der Schaltsignalverlauf 44 in Fig. 2c stellt die Ansteuerung des dem alten Gang zugeordneten Gangschaltventiles dar. Die Ansteuerung des dem alten Gang zugeordneten Gangschaltventiles beginnt demnach mit einer gewissen Verzögerung gegenüber dem Zeitpunkt $t_s$, die sich aus der Summe der Verzögerungszeiten der beiden Verzögerungslieder 34, 35 ergibt. Entsprechend stellt der Schaltsignalverlauf 45 in Fig. 2 die Ansteuerung des dem neuen Gang zugeordneten Gangschaltventiles statt. Auch hier ist die Ansteuerung des dem neuen Gang zugeordneten Gangschaltventiles gegenüber dem Zeitpunkt $t_s$ verzögert, jedoch nur um den Betrag, der der Verzögerung des Verzögerungsgliedes 34 entspricht. Fig. 2 zeigt den Motordrehzahlverlauf 46 während eines Umschaltvorganges. Wie oben beschrieben wird die Motordrehzahl während des Umschaltvorganges entsprechend einem vorgegebenen Motordrehzahlgradienten auf die Synchrondrehzahl geregelt. Dieser Vorgang setzt zum Zeitpunkt $t_s$ ein und ist bei Erreichen des Synchronpunktes zum Zeitpunkt $t_{\bar{s}}$ abgeschlossen. Nur im Falle einer Zwangssynchronisierung, entsprechend dem Schaltsignalverlauf 41 und dem Hauptdruckverlauf 43 ergibt sich ein Motordrehzahlverlauf 47.

Fig. 3 zeigt die bereits in Fig. 2 dargestellten Diagramme für den Fall der Schubhochschaltung. Der Schaltsignalverlauf 48 in Fig. 3a stellt wiederum den Beginn und die Beendigung des Umschaltvorganges dar. Der Hauptdruckverlauf 49 in Fig. 3 zeigt, daß für diesen Betriebsfall der Hauptdruck von dem vor der Einleitung des Umschaltvorganges eingenommenen Sicherheitswert auf einen niedrigeren Wert als dies in Fig. 2b der Fall ist, beispielsweise 30% abgesenkt wird. Die Schaltsignalverläufe 50, 51 in Fig. 3c und 3d zeigen, daß im Falle der Schubhochschaltung die Ansteuerung der den Gangwechsel bewirkenden Gangschaltventile mit dem Ende des Umschaltvorganges vorgenommen wird. Dabei wird das dem neuen Gang entsprechende Gangschaltventil, entsprechend dem Schaltsignalverlauf 51 wiederum vor dem dem alten Gang entsprechenden Gangschaltventil, entsprechend dem Schaltsignalverlauf 50, geschaltet. Während also bei der Lasthochschaltung entsprechend Fig. 2 die Auswahleinheit 33 in Abhängigkeit von der Schuberkennungseinheit 31 die Ansteuerung der Gangschaltventile 12 mit dem modifizierten Schaltbefehl S', entsprechend dem Beginn des Umschaltvorganges, vornahm, erfolgt dies bei der Schubhochschaltung entsprechend Fig. 3 mit dem modifizierten Schaltbefehl $\bar{S}'$, entsprechend dem Ende des Umschaltvorganges. Der Motordrehzahlverlauf 52 in Fig. 3 zeigt wiederum die Drehzahlgradientenregelung für die Hochschaltung.

Fig. 4 zeigt die bereits in den Fig. 2 und 3 dargestellten Diagramme für den Fall der Lastrückschaltung. Der Schaltsignalverlauf 53, der Hauptdruckverlauf 54 und die Schaltsignalverläufe 55, 56, wie sie in den Fig. 4a, 4b, 4c und 4d dargestellt sind, entsprechend denjenigen für den Fall der Schubhochschaltung aus Fig. 3. Der Motordrehzahlverlauf 57 aus Fig 4 stellt hier den Rückschaltvorgang dar, bei dem die Motordrehzahl von einer niedrigeren auf eine höhere Drehzahl mit der Drehzahlgradientenregelung geregelt wird. .

Fig. 5 zeigt die bereits in den Fig. 2, 3 und 4 dargestellten Diagramme für den Fall der Schubrückschaltung. Der Schaltsignalverlauf 58, der Hauptdruckverlauf 59 und die Schaltsignalverläufe 60, 61, wie sie in den Fig. 5a, 5b, 5c und 5d dargestellt sind, entsprechen denen für den Fall der Lasthochschaltung, wie sie in der Fig. 2 gezeigt sind. Der Motordrehzahlverlauf 62 entspricht wiederum einer Rückschaltung.

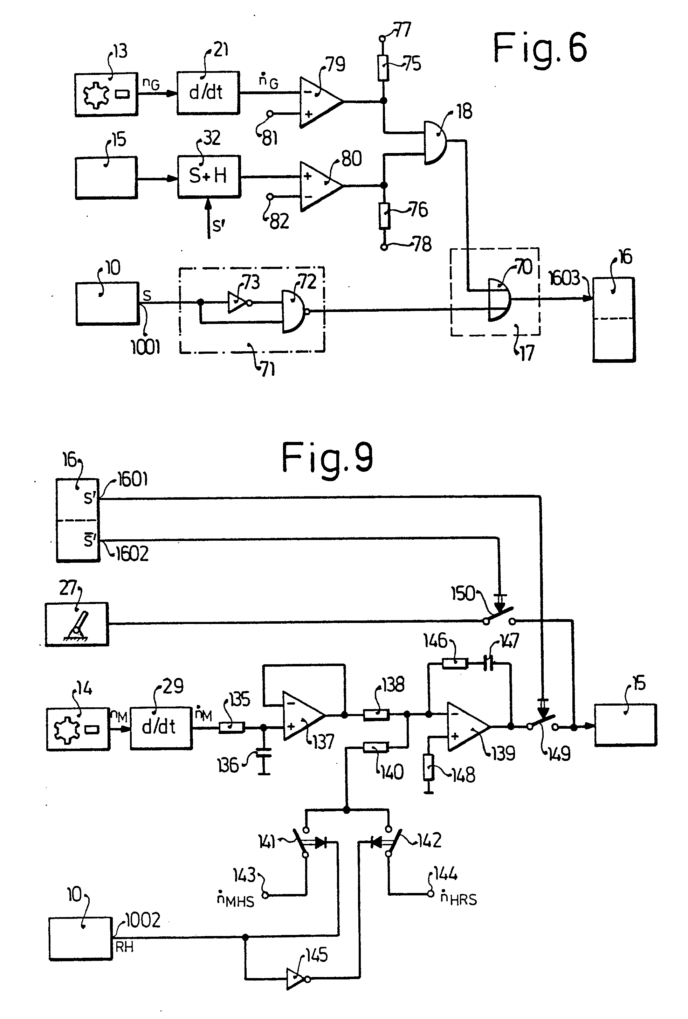

In Fig. 6 ist das Schaltbild einer Verriegelungsstufe, wie sie bei der in Fig. 1 dargestellten Gangwechseleinrichtung verwendet werden kann, dargestellt. Der Setzeingang 1603 des Flipflops 16 ist mit dem Ausgang der Verriegelungsstufe 17 in Gestalt eines ODER-Gatters 70 verbunden, das eingangsseitig an eine Impulsformerstufe 71 und an ein UND-Gatter 18 angeschlossen ist. Die Impulsformerstufe 71 besteht aus einem NAND-Gatter 72, dessen einer Eingang direkt und dessen anderer Eingang über einen Inverter 73 mit dem Schaltbefehl-Ausgang 1001 der Gangwahleinrichtung 10 verbunden ist. Das UND-Gatter 18 ist eingangsseitig über Widerstände 75, 76 mit Klemmen 77, 78 verbunden. Weiterhin ist an den einen Eingang des UND-Gatters 18 ein Komparator 79 und an den anderen Eingang ein Komparator 80 angeschlossen. Der negative Eingang des Komparators 79 ist an die Differenzierstufe 21, der positive Eingang ist an eine Klemme 18 angeschlossen. Der positive Eingang des Komparators 80 steht mit dem Ausgang der Sample-and-Hold-Einheit 32, der negative Eingang steht mit einer Klemme 82 in Verbindung.

Die Wirkungsweise der in Fig. 6 dargestellten Verriegelungsstufe ist wie folgt:

Bildet man das Flipflop 16 mit NAND-Gattern aus, wird zur Ansteuerung des Setzeinganges 1603 ein logisches O-Signal benötigt. Eine Verriegelung des Flipflops 16 kann mithin dadurch bewirkt werden, daß ein Eingang des dem Setzeingang 1603 des Flipflops 16 vorgeschalteten ODER-Gatters 70 auf einem Singal = 1 gehalten wird. Bei der dargestellten Verriegelungsstufe erfolgt dies über das UND-Gatter 18. Liegt der Ausgang des UND-Gatters 18 jedoch auf O, wird der Schaltbefehl S vom Schaltbefehl-Ausgang 1001 der Gangwahleinrichtung 10 auf den Setzeingang 1603 des Flipflops 16 weitergeleitet. Hierzu ist zunächst eine Impulsformung in der Impulsformerstufe 71 nötig. Liegt kein Schaltbefehl vor, ist also S = 0, liegt am Eingang des NAND-Gatters 72 einmal eine 0 und eine 1 und damit am Ausgang eine 1. Das Flipflop 16 kann damit nicht gesetzt werden. Erscheint nun am

9

Schaltbefehl-Ausgang 1001 der Gangwahleinheit 10 ein Schaltbefehl S = 1, liegt dieses auch am direkt angesteuerten Eingang des NAND-Gatters 72, wobei zunächst kurzzeitig durch die Verzögerung des Inverters 73 auch am anderen Eingang noch ein Signal = 1 liegt. Dies hat zur Folge, daß der Ausgang des NAND-Gatters 72 bei Auftreten eines Schaltbefehls S = 1 kurzzeitig von 1 auf 0 schaltet. Durch diesen kurzen negativen Schaltimpuls wird bei freigegebenem ODER-Gatter 70 das Flipflop 16 gesetzt. Will man ein Setzen des Flipflops 16 durch einen Schaltbefehl S unterdrücken, muß, wie oben geschildert, der zweite Eingang des ODER-Gatters 70 auf 1 gehalten werden. Hierzu müssen ebenfalls beide Eingänge des UND-Gatters auf 1 liegen. Diese ist dann erreicht, wenn die Ausgangsspannung der Differenzierstufe 21 kleiner als die an der Klemme 81 vorgegebene Schwellwertspannung und gleichzeitig die Ausgangsspannung der Sample-and-Hold-Einheit 32 größer als die an der Klemme 82 vorgegebene Schwellwertspannung ist. Die an die Klemme 81 gelegte Schwellwertspannung entspricht dabei einem unteren Grenzwer des Fahrzeugbeschleunigung, bei dessen Unterschreiten der Ausgang des Komparators 79 vermittels der an die Klemme 77 gelegten Spannung auf 1 schaltet. Die an die Klemme 82 gelegt Schwellwertspannung repräsentiert die Vollastschwelle, bei deren Überschreiten der Ausgang des Komparators 80 vermittels der an die Klemme 78 angelegten Spannung auf 1 gerät. Damit ist sichergestellt, daß kein unsinniger Schaltbefehl bei Vollast und niedriger Beschleunigung ausgeführt wird.

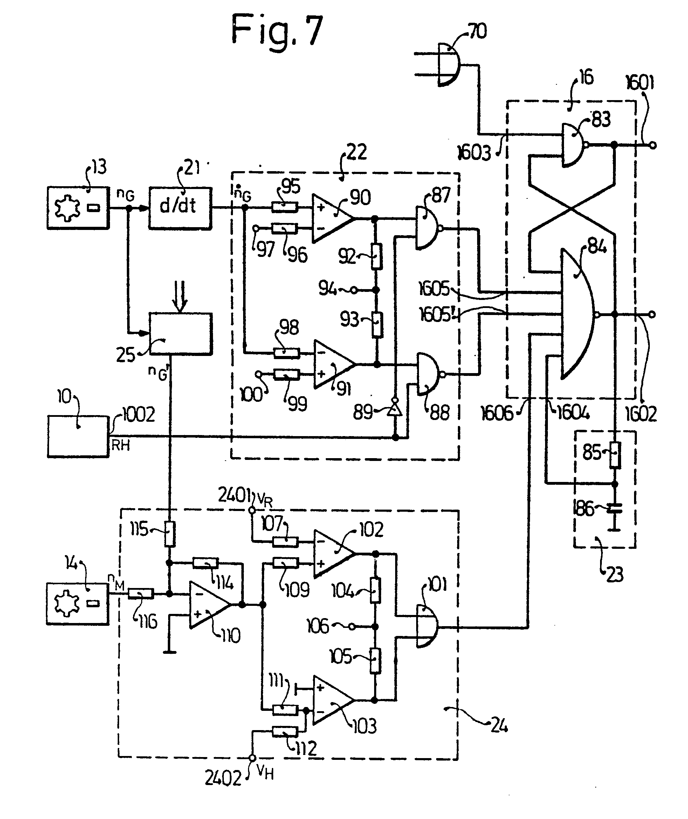

In Fig. 7 ist das Schaltbild eines Flipflops, eines Zeitgliedes, einer Zwangssynchronisierungseinrichtung und eines Komparators dargestellt, wie sie bei der in Fig. 1 dargestellten Gangwechseleinrichtung verwendet werden können.

Das Flipflop 16 ist in bekannter Weise mit NAND-Gattern 83, 84 aufgebaut, wobei der Eingang des NAND-Gatters 83 den Setzeingang 1603 und der Ausgang des NAND-Gatters 83 den Ausgang 1601 bildet. Das NAND-Gatter 84 weist mehrere Eingänge 1604, 1605, 1605' und 1606 auf, sein Ausgang bildet den komplementären Ausgang 1602 des Flipflops 16.

Das Zeitglied 23 ist als RC-Glied, bestehend aus einem Widerstand 85 und einem Kondensator 86 ausgebildet. Der Ausgang des NAND-Gatters 84 ist über den Widerstand 85 mit dem ersten Rücksetzeingang 1604 des Flipflops 16 verbunden, der zudem über den kondensator 86 an Masse liegt. Ist das Flipflop 16 nicht gesetzt, liegt der komplementäre Ausgang 1602 hoch und der Kondensator 86 ist aufgeladen. Wird das Flipflop 16 nun gesetzt, geht der komplementäre Ausgang 1602 auf 0 und der Kondensator 86 wird über den Widerstand 85 entladen. Nach einer gewissen, durch das RC-Glied bestimmte Zeit ist die Spannung am Kondensator 86 soweit abgesunken, daß das Flipflop 16 durch den ersten Rücksetzeingang 1604 zurückgesetzt wird.

Die Zwangssynchronisierungseinrichtung 22 weist NAND-Gatter 87, 88 auf, deren Ausgänge an den zweiten Rücksetzeingang 1605, 1605' angeschlossen sind. Der zweite Eingang des NAND-Gatters 87 ist über einen Inverter 89, der zweite Eingang des NAND-Gatters 88 ist direkt mit dem Hoch/Rückschalt-Informationsausgang 1002 der Gangwahleinrichtung 10 verbunden. Der erste Eingang des NAND-Gatters 87 liegt am Ausgang eines Komparators 90, der erste Eingang des NAND-Gatters 88 am Ausgang eines Komparators 91. Die Ausgänge der Komparatoren 90, 91 sind über eine Reihenschaltung von Widerständen 92, 93 verbunden, deren Mittelanzapfung auf eine Klemme 94 geführt ist. Die Komparatoren 90, 91 sind in vorteilhafter Weise mit den weiter unten beschriebenen Komparatoren 102, 103 zu einem Vierfach-Komparator, wie er beispielsweise unter der Typenbezeichnung CA 139A im Handel ist, zusammengefaßt. Diese Komparatoren weisen einen offenen Kollektor im Ausgang auf. Man kann über die Widerstände 92, 93 (bzw. 104, 105) direkt eine Anpassung an den TTL-Pegel der folgenden Logikelemente bewirken, wobei die Klemme 94 (bzw. 106) an positiver Spannung, beispielsweise 5 V bei TTL liegt. Der positive Eingang des Komparators 90 liegt über einen Widerstand 95 am Ausgang der Differenzierstufe 21, der negative Ausgang über einen Widerstand 96 an einer Klemme 97. Der negative Eingang des Komparators 91 ist über einen Widerstand 98 mit der Differenzierstufe 21, der positive Ausgang ist über einen Widerstand 99 mit der Klemme 100 verbunden.

Die Wirkungsweise der Zwangssynchronisierungseinrichtung 22 ist wie folgt:

Um zu erreichen, daß der Umschaltvorgang zwangsweise beendet wird, wenn während eines Hochschaltvorganges die Fahrzeugbeschleunigung zu stark absinkt oder während eines Rückschaltvorganges die Fahrzeugbeschleunigung zu hoch wird, so daß in beiden Fällen der Synchronpunkt nicht mehr erreicht werden kann, wird zunächst die Fahrzeugbeschleunigung mit vorgegebenen Grenzwerten verglichen. Ein der Fahrzeugbeschleunigung entsprechendes Signal steht am Ausgang der Differenzierstufe 21, die an den Getriebeausgangsdrehzahl-Geber 13 angeschlossen ist, zur Verfügung. Dieses Signal wird nun in den Komparatoren 90, 91 mit an den Klemmen 97, 100 vorgegebenen Schwellwertspannungen verglichen. Der Komparator 90 ist beispielsweise für den Rückschaltvorgang vorgesehen. Überschreitet die am positiven Eingang des Komparators 90 liegende Spannung, entsprechend der Fahrzeugbeschleunigung, die am negativen Eingang liegende, entsprechend dem eingestellten Schwellwert erscheint am Ausgang des Komparators 90 das Signal 1. Beim Rückschalten ist die Hoch/Rückschalt-Information RH = 0. Dieses Signal wird im Inverter 89 invertiert und gelangt als 1 auf den zweiten Eingang des NAND-Gatters 87, das nun an seinem Ausgang eine 0 führt und damit das Flipflop 16 zurücksetzt. Entsprechend wird bei Unterschreiten eines über die Klemme 100 dem Komparator 91 aufschaltbaren Grenzwertes durch die Fahrzeugbeschleunigung der Ausgang des Komparators 91 auf 1 gesetzt, so daß bei Hochschaltvorgängen, entsprechend RH = 1 über das NAND-Gatter 88 das Flipflop 16 zurückgesetzt wird.

Der Komparator 24 weist in seinem Ausgang ein ODER-Gatter 101 auf, dessen Eingänge mit den Ausgängen von Komparatoren 102, 103 verbunden sind. Die Ausgänge der Komparatoren 102, 103 sind weiterhin über eine Reihenschaltung von Widerständen 104, 105 verbunden, deren Mittelanzapfung auf eine Klemme 106 geführt ist. Der negative Eingang des Komparators 102 ist über einen Widerstand 107 mit einer Klemme 2401, der positive Eingang ist über ein Widerstand 109 mit dem Ausgang eines Operationsverstärkers 110 verbunden. Der positive Eingang des Komparators 103 liegt an Masse, der negative Eingang ist über einen Widerstand 111 mit dem Ausgang des Operations-verstärkers 110 und über einen Widerstand 112 mit einer Klemme 2402 verbunden. Der Operationsverstärker 110 ist mit einem Widerstand 114 gegengekoppelt, sein nichtinvertierender Eingang liegt an Masse, sein invertierender Eingang ist über einen Widerstand 115 mit der Wichtungsstufe 25 sowie über einen Widerstand 116 mit dem Motordrehzahl-Geber 14 verbunden.

Die Wirkungsweise des Komparators 24 ist wie folgt: Dem Eingang des als Summierverstärker geschalteten Operations verstärkers 110 werden der Motordrehzahl $n_M$ und der gewichtet Getriebeausgangsdrehzahl $n'_G$ entsprechende Spannungen zugeführt. Die der gewichteten Getriebeausgangsdrehzahl $n'_G$ entsprechend Spannung wird gewonnen, indem die Ausgangsspannung des Getriebeausgangs-Gebers 13 in einer Wichtungsstufe entsprechend dem Übersetzungsverhältnis des einzulegenden Ganges heruntergeteilt wird. Am Ausgang des als Summierverstärkers geschalteten Operationsverstärkers 110 liegt mithin eine Spannung an, die der Differenz aus gewogener Getriebeausgangsdrehzahl $n'_G$ und Motordrehzahl $n_M$ entspricht. Diese Spannung wird den Komparatoren 102, 103 zugeleitet, mit denen der Synchronpunkt elektronisch vorgehalten werden kann. Zu diesem Zweck ist der Komparator 102 über die Klemme 2401 mit einem dem Vorhalt beim Rück-schalten entsprechenden Signal $V_R$ und der Komparator 103 über die Klemme 2402 mit einem dem Vorhalt beim Hochschalten $V_H$ entsprechendem Signal beschaltet. Überschreitet nu die Differenzdreh-zahl $n'_G - n_M$ den Vorhalt beim Rückschalten $V_R$, oder unterschreitet die Drehzahldifferenz den Vorhalt beim Hochschalten $V_H$ geht der Ausgang des Komparators 102 bzw. des Komparators 103 auf 1 und damit ebenfalls der Ausgang des ODER-Gatters 101. Erst wenn die Drehzahldifferenz $n'_G - n_M$ beim Rückschalten den Vorhalt $V_R$ unterschreitet oder beim Hochschalten den Vorhalt $V_H$ überschreitet, liegen die Ausgänge beider Komparatoren 102, 103 auf 0, wodurch über das ODER-Gatter 101 das Flipflop 16 zurückgesetzt wird.

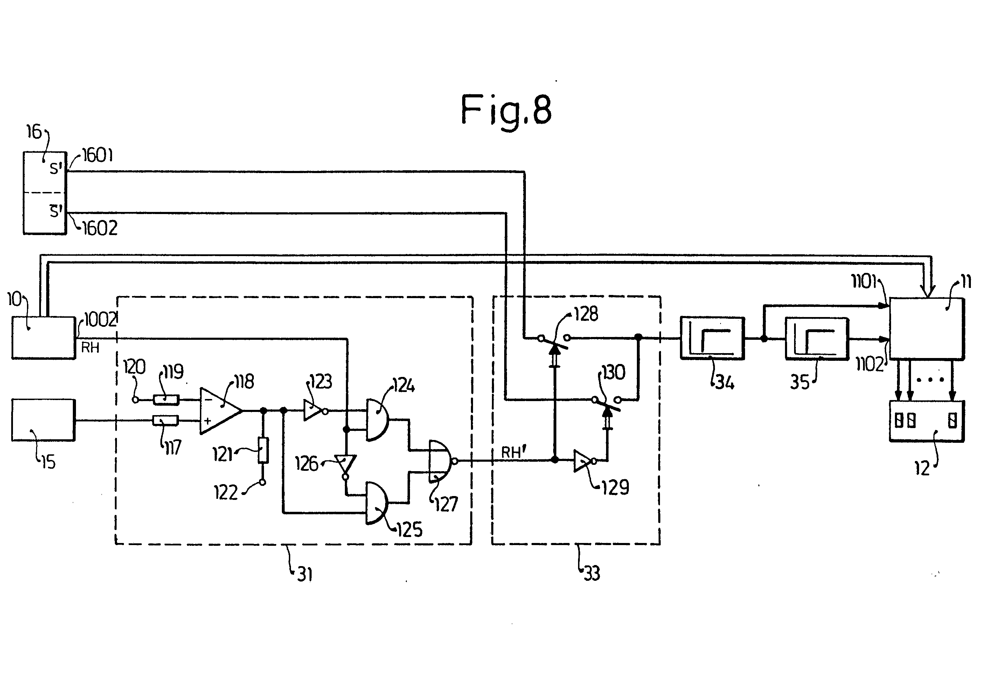

In Fig. 8 ist das Schaltbild einer Schuberkennungseinheit und einer Auswahleinheit, wie sie bei der in Fig. 1 dargestellten Gangwechseleinrichtung verwendet werden können, dargestellt.

Im Eingang der Schuberkennungseinheit 31 ist der Ausgang der Energieträgerzumessungsvorrichtung 15 über einen Widerstand 117 auf den positiven Eingang eines Komparators 118 geführt, dessen negativer Eingang über einen Widerstand 119 mit einer Klemme 120 verbunden ist. Der Ausgang des Komparators 118 ist über einen Widerstand 121 mit einer Klemme 122 verbunden und liegt ferner über einen Inverter 123 am ersten Eingang eines UND-Gatters 124 sowie direkt am zweiten Eingang eines UND-Gatters 125. Außerdem ist die Schuberkennungseinheit 31 eingangsseitig an die Gangwahleinrichtung 10 angeschlossen, wobei der zweite Eingang des UND-Gatters 124 direkt und der erste Eingang des UND-Gatters 125 über einen Inverter 126 an den Hoch/Rückschalt-Informationsausgang 1002 angeschlossen sind. Die Ausgänge der UND-Gatter 124, 125 sind auf ein NOR-Gatter 127 geführt, dessen Ausgang den Ausgang der Schuberkennungseinheit 31 bildet.

Die Wirkungsweise der in Fig. 8 dargestellten Schuberkennungseinheit 31 ist wie folgt:

Wie eingangs geschildert, wird für die Systematik der erfindungsgemäßem Gangwechseleinrichtung eine Information darüber benötigt, in welchem Betriebsfall (Hoch-, Rück-, Schub-, Lastschaltung) sich das Fahrzeug befindet. Da von der Ansteuerung der Kupplungen und Bremsen im Stufengetriebe eine Lasthochschaltung einer Schubrückschaltung und eine Lastrückschaltung einer Schubhochschaltung entspricht, ist es ausreichend, ein logisches Signal dafür zur Verfügung zu haben, ob einer dieser oder jener Betriebszustände vorliegt. Hierzu wird in der Schuberkennungseinheit 31 zunächst zwischen Schubbetrieb und Lastbetrieb unterschieden. Das Ausgangssignal der Energieträgerzumessungsvorrichtung 15, das nämlich des Drehmoment vorgibt, wird im Komparator 118 mit einer an die Klemme 120 geschalteten Schwellwertspannung verglichen. Unterschreitet das Ausgangssignal der Energieträgerzumessungsvorrichtung 15 diesen Schwellwert, liegt Schubbetrieb vor, überschreitet es den Schwellwert, liegt Lastbetrieb vor. Da das Lastsignal über den Widerstand 117 auf den positiven Eingang des Komparators 118 geführt ist, liegt der Ausgang des Komparators 118 im Schubbetrieb auf 0 und im Lastbetrieb auf 1, was durch die an die Klemme 122 geschaltete Hilfsspannung bewirkt wird. Die nachfolgende, aus den Invertern 123, 126, den UND-Gattern 124, 125 und den NOR-Gattern 127 bestehende Schaltung hat die Funktion einer Äquivalenzschaltung. Diese Äquivalenzschaltung wird von der Hoch/Rückschalt-Information RH einerseits und dem Ausgang des Komparators 118, entsprechend einem Schub/Lastsignal andererseits angesteuert. Die Funktion der Äquivalenzschaltung ist, daß die Hoch/Rückschalt-Information RH im Lastfall unverändert am Ausgang erscheint, während sie im Schubfall invertiert wird. Bei einem Lasthochschaltvorgang (RH = 1, Ausgang des Komparators 118 = 1) sind beispielsweise die UND-Gatter 124, 125 je einmal mit 0 und 1 beschaltet, damit liegen ihre beiden Ausgänge auf 0 und der Ausgang des NOR-Gatters 127 wiederum auf 1. Insgesamt ergibt sich für das Ausgangssignal der Schuberkennungseinheit 31 folgende Tabelle:

| RH | Betriebsweise | Ausgang NOR (12) |
|----|---------------|------------------|
| 0 | Last | 0 |
| 1 | Last | 1 |
| 0 | Schub | 1 |
| 1 | Schub | 0 |

Wie man der Tabelle entnehmen kann, wird entsprechend der Aufgabe von der Schuberkennungseinheit die Hoch/Rückschalt-Information RH im Lastfall unverändert weitergeleitet und im Schubfall invertiert, anders ausgedrückt: es erscheint am Ausgang der Schuberkennungseinheit 31 für Schubhoch- und Lastrückschaltvorgänge das Signal 0 für Lasthoch- und Schubrückschaltvorgänge das Signal 1. Das Ausgangssignal der Schuberkennungseinheit 31 sei mit RH' bezeichnet.

Die Auswahleinheit 33 weist einen Schalter 128, vermittels dessen der Ausgang 1601 des Flipflops 16 und einen Schalter 130, vermittels dessen der komplementäre Ausgang 1602 des Flipflops 16 mit dem Totzeitglied 34 verbindbar ist, auf. Der Steuereingang des Schalters 128 ist dabei direkt, der des Schalters 130 über einen Inverter 129 mit dem Ausgang der Schuberkennungseinheit 31 verbunden. Die Wirkungsweise der in Fig. 8 dargestellten Auswahleinheit ist wie folgt:

Um bei Lasthoch- und Schubrückschaltvorgängen die Betätigung der Gangschaltventile 12 mit der Einleitung des Umschaltvorganges und bei Schubhoch- und Lastrückschaltung mit der Beendigung des Umschaltvorganges einleiten zu können, wird zur Ansteuerung der Verzögerungsglieder 34, 35 und damit der Dekodierstufe 11 einmal der modifizierte Schaltbefehl S' und im anderen Fall der modifizierte Schaltbefehl $\overline{S'}$ verwendet. Bei Lasthoch- und Schubrückschaltung ist die modifizierte Hoch/Rückschalt-Information RH' = 1 und der Schalteingang 28 wird geschlossen. Damit wird der Umschaltvorgang vom Ausgang 1601 des Flipflops 16 mit dem modifizierten Schaltbefehl S' entsprechend dem Beginn des Umschaltvorganges angestoßen. Entsprechend ergibt sich für die Schubhoch- und Lastrückschaltung eine Ansteuerung vom komplementären Ausgang 1602 des Flipflops 16 über den Schalter 130.

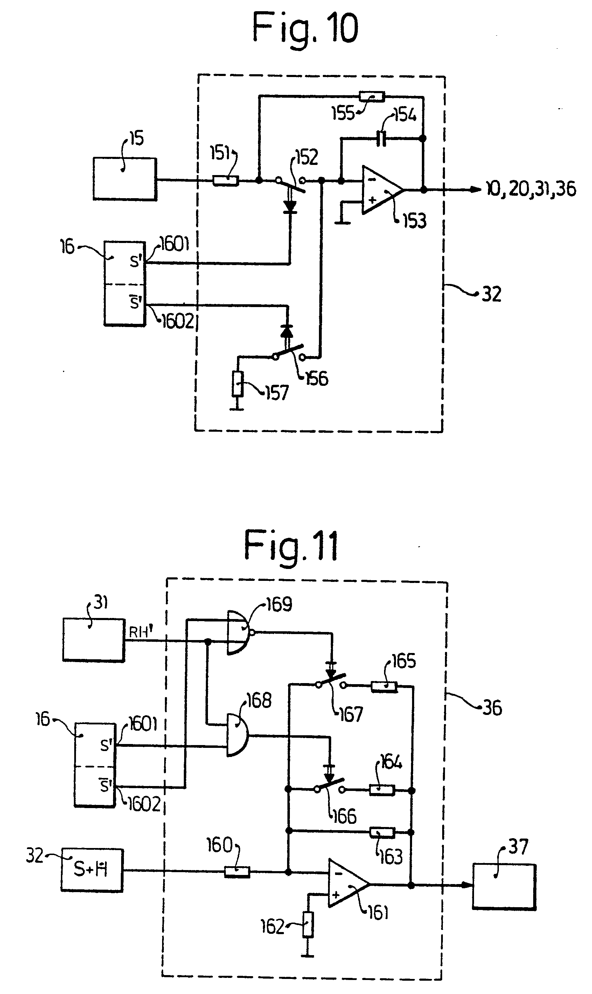

In Fig. 9 ist das Schaltbild eines Reglers sowie von Umschaltern, wie sie bei der in Fig. 1 dargestellten Gangwechseleinrichtung verwendet werden können, dargestellt.

Der Ausgang der dem Motordrehzahl-Geber 14 nachgeschalteten Differenzierstufe 29 ist über ein aus einem Widerstand 135 einem Kondensator 136 bestehendes RC-Glied auf den nicht invertierenden Eingang eines gegengekoppelten Operations-verstärkers 137 geführt. Dessen Ausgang ist über einen Widerstand 138 mit dem invertierenden Eingang eines Operationsverstärkers 139 verbunden, der zudem über einen Widerstand 140 sowie über Schalter 141, 142 mit Klemmen 143, 144 verbindbar ist. Der Steuereingang des Schalters 141 ist direkt, der des Umschalters 142 ist über einen Inverter 145 mit dem Hoch/Rückschalt-Informationsausgang 1002 der Gangwahleinrichtung 10 verbunden. Der Operationsverstärker 139 ist mit der Reihenschaltung eines Widerstandes 146 und eines Kondensators 147 gegengekoppelt, sein nicht invertierender Eingang liegt über einen Widerstand 148 an Masse. Der Ausgang des Operationsverstärkers 139 ist schließlich über einen Schalter 149 mit dem Eingang der Energieträgerzumessungsvorrichtung 15 verbindbar, wobei der Steuereingang des Schalters 149 mit dem Ausgang 1601 des Flipflops 16 in Verbindung steht. Der Eingang der Energieträgerzumessungsvorrichtung 15 ist außerdem über einen Schalter 150 mit dem Sollwertgeber 27 verbindbar, wobei der Steuereingang des Schalters 150 an den komplementären Ausgang 1602 des Flipflops 16 angeschlossen ist.

Die Wirkungsweise des in Fig. 9 dargestellten Reglers 28 sowie der Umschalter 26, 30 ist wie folgt:

Zu Beginn eines Umschaltvorganges soll der Eingang der Energieträgerzumessungsvorrichtung 15 erfindungsgemäß vom Sollwertgeber 27 auf den Ausgang des Reglers 28 umgeschaltet werden. Dies erfolgt vermittels der modifizierten Schaltbefehle S' und $\overline{S'}$, die die Schalter 149, 150 betätigen. Im normalen Fahrbetrieb ist der Schalter 149 geöffnet und der Schalter 150 geschlossen. Tritt nun ein modifizierter Schaltbefehl S' = 1 auf, wird der Schalter 149 geschlossen und der Schalter 150 geöffnet. Damit ist der Eingang der Energieträgerzumessungsvorrichtung 15 an den Ausgang des als Regler geschalteten Operationsverstärkers 139 angeschlossen. Als Eingangssignale des Reglers dienen dabei die erste zeitliche Ableitung der Motordrehzahl $\dot{n}_M$ sowie der für den jeweiligen Betriebsfall erforderliche Motordrehzahlgradienten-Sollwert $\dot{n}_{MHS}$, $\dot{n}_{MRS}$. Die erste zeitliche Ableitung der Motordrehzahl $\dot{n}_M$ wird in der Differenzierstufe 29, beispielsweise einem Phasenregelkreis, gewonnen. Ein solcher Phasenregelkreis liefert ein zur Drehzahl proportionales Spannungssignal und eine Impulsfolge, deren Mittelwart proportional zur Änderung der Motordrehzahl ist. Durch nachfolgende Glättung im RC-Glied 135, 136 erhält man eine Spannung, die proportional der ersten zeitlichen Ableitung der Motor-

O 001 298

drehzahl $\dot{n}_M$ ist. Das so gewonnene Signal wird dem als Summenpunkt dienenden invertierenden Eingang des Operationsverstärkers 139 zugeführt, an dem es mit dem jeweiligen Motordrehzahl-gradienten-Sollwert $\dot{n}_{MHS}$, $\dot{n}_{MRS}$ vergleichen wird. Diese Motordrehzahlgradienten-Sollwerte sind als geeignete Spannungen auf die Klemmen 143, 144 gelegt, wobei vermittels der Schalter 141, 142 der für den Hoch- bzw. Rückschaltvorgang erforderliche Sollwert in Abhängigkeit von der Hoch/Rückschalt-Information RH über den Widerstand 140 auf den invertierenden Eingang des Operationsverstärkers 139 gebracht wird. An diesem Eingang liegt also die Differenz von Istwert und Sollwert der ersten zeitlichen Ableitung der Motordrehzahl. Die nachfolgende, aus dem Operationsverstärker 139 gebildete Regelstrecke ist in dem in Fig. 9 dargestellten Ausführungsbeispiel in vorteilhafter Weise als PI-Regler ausgebildet. Sie ist jedoch keinesfalls auf diese Regelart beschränkt. Das so gewonne Stellsignal gelangt nun über den geschlossen Schalter 149 auf den Eingang der Energieträgerzumessungsvorrichtung 15, bis der Schaltvorgang beendet wird und der modifizierte Schaltbefehl S' wieder den Wert 0 annimmt, wodurch der Schalter 149 wieder geöffnet wird.

In Fig. 10 ist das Schaltbild einer Sample-and-Hold-Einheit 32, wie sie bei der in Fig. 1 dargestellten Gangwahleinrichtung verwendet werden kann, dargestellt.

Der Ausgang der Energieträgerzumessungsvorrichtung 15 ist eingangsseitig an die Sample-and-Hold-Einheit 32 angeschlossen und von dort über einen Widerstand 151 und einen Schalter 152 auf den invertierenden Eingang eines Operationsverstärkers 153 geführt, der mit einem Kondensator 154 gegengekoppelt ist. Der Ausgang des Operationsverstärkers 153 ist außerdem über einem Widerstand 155 mit dem Verbindungspunkt des Widerstandes 151 mit dem Schalter 152 verbunden. Der invertierende Eingang des Operationsverstärkers 153 ist über einen Schalter 156 und einen Widerstand 157 an Masse anschließbar. Der Steuereingang des Schalters 152 ist mit dem Ausgang 1601, der des Schalters 156 ist mit dem komplementären Ausgang 1602 des Flipflops 16 verbunden. Der Ausgang der Sample-and-Hold-Einheit 32 ist an die Gangwahleinrichtung 10, die Schwellwertstufen 20, die Schuberkennungseinheit 31 sowie die Druckstufenschaltung 36 angeschlossen.

Die Wirkungsweise der in Fig. 10 dargestellten Sample-and-Hold-Einheit ist wie folgt:

Die Sample-and-Hold-Einheit 32 dient dazu, im normalen Fahrbetrieb das Ausgangssignal der Energieträgerzumessungsvorrichtung 15 auf die nachgeschalteten Baugruppen 10, 20, 31, 36 weiterzuleiten und bei Vorliegen eines modifizierten Schaltbefehles S' den bei Eintreffen des modifizierten Schaltbefehles S' eingenommenen Augenblickswert an ihrem Ausgang zu verrasten. Solange nicht umgeschaltet wird, d.h. der modifizierte Schaltbefehl S' = 0 ist, ist der Schalter 152 geschlossen und der Schalter 156 geöffnet. Der Operationsverstärker 153 ist dann als Proportionalglied erster Ordnung geschaltet, wobei die Zeitkonstante der Dynamik des Eingangssignals angepaßt ist. Tritt jedoch ein modifizierter Schaltbefehl S' = 1 auf, wird der Schalter 152 geöffnet und der Schalter 156 geschlossen. Der Operationsverstärker 153 ist nun als Integrator geschaltet, wobei sein invertierender Eingang über den Widerstand 157 an Masse liegt. Am Ausgang des Operationsverstärkers 153 und damit am Ausgang der Sample-and-Hold-Einheit 32 wird damit der Wert gespeichert, der zum Zeitpunkt des Umschaltens der Schalter 152, 156 vorlag.

In Fig. 11 ist das Schaltbild einer Druckstufenschaltung 36, wie sie bei der in Fig. 1 dargestellten Gangwechseleinrichtung verwendet kann, dargestellt.

Die Sample-and-Hold-Einheit 32 ist über einen Widerstand 160 mit dem invertierenden Eingang eines Operationsverstärkers 161 verbunden, dessen nicht invertierender Eingang über einen Widerstand 162 auf Masse gelegt ist. Der Operationsverstärker 161 ist mit einem Rückkopplungswiderstand 163 gegenkoppelt. Dem Rückkopplungswiderstand 163 sind weitere Widerständer 164, 165 vermittels Schaltern 166, 167 parallel zuschaltbar. Der Steuereingang des Schalters 166 ist mit dem Ausgang eines UND-Gatters 168, der des Schalters 167 mit dem Ausgang eines NOR-Gatters 169 verbunden. Der Ausgang der Schuberkennungseinheit 31 ist mit dem ersten Eingang des UND-Gatters 168 und dem zweiten Eingang des NOR-Gatters 169 verbunden. Der zweite Eingang des UND-Gatters 168 ist auf den Ausgang 1601, der erste Eingang des NOR-Gatters 169 ist auf den komplementären Ausgang 1602 des Flipflops 16 geführt.

Die Aufgabe der Druckstufenschaltung 36 nach der Erfindung ist, das dem Hauptdruckregler 37 zugeführte und von der Energieträgerzumessungsvorrichtung 32 kommende Signal in Abhängigkeit von den oben beschriebenen Schaltbedingungen in Stufen umzuschalten. Soll nicht umgeschaltet werden (S' = 0), liegt ein Eingang des UND-Gatters 168 auf 0 und ein Eingang des NOR-Gatters 169 auf 1. Die Ausgänge beider Gatter 168, 169 liegen damit auf 0 und die Schalter 166, 167 sind geöffnet. Das Steuersignal für den Hauptdruckregler 37 wird nun durch das Verhältnis der Widerstände 163, 160 bestimmt und kann beispielsweise so eingestellt werden, daß der Hauptdruck im Stufengetriebe immer den 1,5 fachen Betrag des zum Übertragen des Drehmomentes notwendigen Wertes annimmt. Soll jedoch umgeschaltet werden (S' = 1), wird bei Schubhoch- bzw. Lastrückschaltung (RH' = 0) über das NOR-Gatter 169 der Schalter 167 geschlossen. Entsprechend wird bei Lasthoch- bzw. Schubrückschaltungen (RH' = 1) über das UND-Gatter 168 der Schalter 166 betätigt. Im ersten Falle wird dem Rückkopplungswiderstand 163 der Widerstand 165 parallel geschaltet im zweiten Fall der Widerstand 164. Auf diese Weise kann der bezogene Hauptdruck in Abhängigkeit vom vorliegenden Betriebsfall auf einen geeigneten Wert abgesenkt werden, beispielsweise bei Schubhoch- bzw. Lastrückschaltung auf

13

30% und bei Schubrück- bzw. Lasthochschaltung auf 100%. Bei Beendigung des Schaltvorganges (S' = 0) werden die beiden Schalter 166, 167 wieder geöffnet und der Hauptdruck wieder auf seinen Sicherheitswert von beispielsweise 150% gebracht.

**Patentansprüche**

1. Gangwechseleinrichtung für Lastschaltgetriebe mit einer Gangwahleinrichtung (10), einem Hauptdruckregler (37) zur Ansteuerung von Gangschaltventilen (12) des Lastschaltgetriebes, einem Motordrehzahl- und einem Getriebeausgangdrehzahl-Geber (14, 13), ersten Schaltmitteln (24, 25) zur Ermittlung des Über-, Untersynchronlaufes oder Synchronlaufes des Lastschaltgetriebes, einer dem Lastschaltgetriebe vorgeschalteten Antriebsmotor zugeordneten Energieträgerzumessungsvorrichtung (15) und Mitteln zum Synchronisieren, dadurch gekennzeichnet, daß die Mittel zum Synchonisieren bei Einleitung eines Umschaltvorganges durch die Gangwahleinrichtung (10) mit Motordrehzahl ($n_M$) durch einen Regler (28) mit vorgegebener Zeitfunktion auf die Synchrondrehzahl regeln, daß zweite Schaltmittel (10, 31) zur Unterscheidung von Hoch/Rück- sowie Last/Schubschaltvorgängen vorgesehen sind, daß die Schaltpunkte der Gangschaltventile (12) durch eine Auswahleinheit (33) und der Hauptdruckregler (37) in Abhängigkeit von der erkannten Schaltart eingestellt werden.

2. Gangwechseleinrichtung nach Anspruch 1, dadurch gekennzeichnet, daß die Gangwahleinrichtung (10) einen Schaltbefehl (S) une eine Hoch/Rückschalt-Information (RH) abgibt, daß ein Umschaltvorgang vorzugsweise über ein Flipflop (16) durch einen Schaltbefehl (S) eingeleitet und dann beendet wird, wenn die ersten Schaltmittel (24, 25) ein Synchronsignal abgeben oder wenn die erste zeitliche Ableitung der Getriebeausgangsdrehzahl ($\dot{n}_G$, Differenzierstufe 21) bei Hochschaltvorgängen einen vorgebbaren Wert unterschreitet oder bei Rückschaltvorgängen einen vorgebbaren Wert überschreitet (Zwangssynchronisierungseinrichtung 22) oder wenn seit Einleitung des Umschaltvorganges eine vorgebbare Zeit verstrichen ist (Zeitglied 23).

3. Gangwechseleinrichtung nach Anspruch 2, dadurch gekennzeichnet, daß der Schaltbefehl (S) im Hochschaltfall durch eine Verriegelungsstufe (17) unterdrückt wird, wenn das Ausgangssignal der Energieträgerzumessungsvorrichtung (15) einen vorgebbaren Wert überschreitet und die erste zeitliche Ableitung der Getriebeausgangsdrehzahl ($\dot{n}_G$) einen vorgebbaren Wert unterschreitet.

4. Gangwechseleinrichtung nach einem der vorhergehenden Ansprüche, dadurch gekennzeichnet, daß der Sollwerteingang der Energieträgerzumessungsvorrichtung (15) bei Einleitung eines Umschaltvorganges von einem Sollwertgeber (27) auf den Regler (28) umgeschaltet und bei Beendigung des Umschaltvorganges wieder von dem Regler (28) auf den Sollwertgeber (27) zurückgeschaltet wird.

5. Gangwechseleinrichtung nach Anspruch 4, dadurch gekennzeichnet, daß em Regler (28) für Hoch- und Rückschaltvorgänge wenigstens jeweils ein Drehzahlgradientensollwert ($\dot{n}_{MHS}$, $\dot{n}_{MRS}$) aufschaltbar ist und daß dem Regler (28) über eine Differenzierstufe (29) von dem Motordrehzahl-Geber (14) ein Sollwert zugeführt wird.

6. Gangwechseleinrichtung nach einem der vorhergehenden Ansprüche, dadurch gekennzeichnet, daß das Ausgangssignal der Energieträgerzumessungsvorrichtung (15) bei Einleitung eines Umschaltvorganges auf seinem Augenblickswert, vorzugsweise durch eine Sample and Hold-Stufe (32) verrastet wird.

7. Gangwechseleinrichtung nach einem der vorhergehenden Ansprüche, dadurch gekennzeichnet, daß der Hauptdruck über eine Druckstufenschaltung (36) bei Nichtvorliegen eines Umschaltvorganges auf einen ersten, über dem zur Übertragung des jeweiligen Drehmomentes erforderlichen Hauptdruckwert liegenden Hauptdruckwert eingestellt, bei Einleitung eines Lasthoch- oder Schubrückschaltvorganges auf einen zweiten, unterhalb des ersten liegenden und bei Einleitung eines Schubhoch- oder Lastrückschaltvorganges auf einen dritten, unterhalb des zur Übertragung des jeweiligen Drehmomentes erforderlichen Hauptdruckwertes liegenden Hauptdruckwert abgesenkt wird.

8. Gangwechseleinrichtung nach Anspruch 7, dadurch gekennzeichnet, daß der erste Hauptdruckwert 150%, der zweite 100% und der dritte 30% des zur Übertragung des jeweiligen Drehmoments erforderlichen Hauptdruckwertes ist.

9. Gangwechseleinrichtung nach einem der vorhergehenden Ansprüche, dadurch gekennzeichnet, daß durch die Auswahleinheit (33) bei Durchführung eines Lasthoch- oder Schubrückschaltvorganges die Umschaltung der den Gangwechsel bewirkenden Gangschaltventile (12) mit oder kurz nach Einleitung des Umschaltvorganges bewirkt wird.

10. Gangwechseleinrichtung nach Anspruch 9, dadurch gekennzeichnet, daß durch wenigstens zwei Totzeitglieder (34, 35) das dem alten Gang zugeordnete Gangschaltventil mit einer ersten Totzeit und das dem neuen Gang zugeordnete Gangschaltventil mit einer zweiten Totzeit gegenüber dem Schaltbefehl (S) betätigt wird.

11. Gangwechseleinrichtung nach Anspruch 10, dadurch gekennzeichnet, daß die zweite Totzeit kürzer ist als die erste.

12. Gangwechseleinrichtung nach einem der vorhergehenden Ansprüche, dadurch gekennzeichnet, daß durch die Auswahleinheit (33) bei Durchführung eines Lastrück- oder Schubhochschaltvorganges die Umschaltung der den Gangwechsel bewirkenden Gangschaltventile (12) entweder mit dem von den ersten Schaltmitteln (24, 25) abgegebenen Synchronsignal oder wenn die erste zeitliche

14

**0 001 298**

Ableitung der Getriebeausgangsdrehzahl ($\dot{n}_G$) bei Schubhochschaltung einen vorgebbaren Wert unterschreitet oder bei Lastrückschaltungen einen vorgebbaren Wert überschreitet oder jeweils kurz danach bewirkt wird oder wenn seit Einleitung des Umschaltvorganges eine vorgebbare Zeit verstrichen ist, ausgeführt wird.

13. Gangwechseleinrichtung nach Anspruch 12, dadurch gekennzeichnet, daß durch wenigstens zwei Totzeitglieder (34, 35) das dem alten Gang zugeordnete Gangschaltventil mit einer ersten Totzeit und das dem neuen Gang zugeordnete Gangschaltventil mit einer zweiten Totzeit gegenüber dem die Beendigung des Gangschaltvorganges auslösenden Signal betätigt wird.

14. Gangwechseleinrichtung nach Anspruch 13, dadurch gekennzeichnet, daß die zweite Totzeit kürzer ist als die erste.

15. Gangwechseleinrichtung nach einem der vorhergehenden Ansprüche, dadurch gekennzeichnet, daß das Flipflop (16) mit einem Setzeingang (1603), Rücksetzeingängen (1604, 1605, 1606), einem Ausgang (1601) und einem komplementären Ausgang (1602) vorgesehen ist, daß der Setzeingang (1603) mit dem Schaltbefehl-Ausgang (1001) der Gangwahleinrichtung (10) in Wirkungsverbindung steht, daß der erste Rücksetzeingang (1604) mit dem Zeitglied (23), das an den Ausgang (1601) des Flipflops (16) angeschlossen ist, ein zweiter Rücksetzeingang (1605) mit der Zwangsynchronisierungseinrichtung (22) und der dritte Rücksetzeingang (1606) mit den ersten Schaltmitteln (24, 25) verbunden ist, und daß der Ausgang (1601) des Flipflops (16) mit dem Hauptdruckregler (37) den Gangschaltventilen (12), vorzugsweise der der Energieträgerzumessungsvorrichtung (15) nachgeschalteten Sample and Hold-Einheit (32) und einem der Energieträgerzumessungsvorrichtung (15) vorgeschalteten Umschalter (26) in Wirkungsverbindung steht.

16. Gangwechseleinrichtung nach Anspruch 15, dadurch gekennzeichnet, daß das Flipflop (16) mit NAND-Gattern (83, 84) aufgebaut ist, daß der Setzeingang (1603) an die als OR-Gatter (70) ausgebildete Verriegelungsstufe (17) angeschlossen ist, dessen einer Eingang über eine Impulsformerstufe (70) mit dem Schaltbefehl-Ausgang (1001) der Gangwahleinrichtung (10) und dessen anderer Eingang mit einem UND-Gatter (18) verbunden ist, dessen Eingänge an als Schwellwertstufen geschaltete Komparatoren (79, 80) gelegt sind, die mit dem Getriebeausgangsdrehzahl-Geber (13) und der Energieträgerzumessungsvorrichtung (15) verbunden sind.

17. Gangwechseleinrichtung nach Anspruch 16, dadurch gekennzeichnet, daß die Impulsformerstufe (71) als NAND-Gatter (72) ausgebildet ist, dessen einer Eingang direkt und dessen anderer Eingang über einen Inverter (73) vom Schaltbefehl-Ausgang (1001) der Gangwahleinrichtung (10) angesteuert wird.

18. Gangwechseleinrichtung nach einem der vorhergehenden Ansprüche, dadurch gekennzeichnet, daß die ersten Schaltmittel (24, 25) aus einem Komparator (24), der mit dem Motordrehzahl-Geber (14) verbunden ist und aus einer Wichtungsstufe (25), die mit dem Getriebeausgangsdrehzahl-Geber (13) und dem Komparator (24) verbunden ist, bestehen.

19. Gangwechseleinrichtung nach einem der Ansprüche 1 bis 17, dadurch gekennzeichnet, daß die ersten Schaltmittel (24, 25) aus zwei Komparatoren (102, 103) mit jeweils einstellbarem Vorhalt ($V_H$, $V_R$), deren Eingänge mit dem Motordrehzahl-Geber (14) verbunden sind und aus einer Wichtungsstufe (25), die mit dem Getriebeausgangsdrehzahl-Geber (13) und den Komparatoren (102, 103) bestehen, verbunden sind.

20. Gangwechseleinrichtung nach einem der Ansprüche 15 bis 19, dadurch gekennzeichnet, daß die Zwangssynchronisierungseinrichtung (22) einen Komparator (90), dessen nichtinvertierender Eingang über die Differenzierstufe (21) an den Getriebeausgangsdrehzahl-Geber (13) angeschlossen und dessen invertierender Eingang mit einer Schwellwertspannung beschaltet ist und einen anderen Komparator (91) aufweist, dessen invertierender Eingang mit der Differenzierstufe (21) und dessen nichtinvertierender Eingang mit einer Schwellwertspannung beschaltet ist, daß der Ausgang des einen Komparators (90) auf einen Eingang eines NAND-Gatters (87) gelegt ist, dessen anderer Eingang über einen Inverter (89) an den Hoch/Rückschalt-Informationsausgang (1002) der Gangwahleinheit (10) angeschlossen ist, daß der Ausgang des anderen Komparators (91) auf einen Eingang eines NAND-Gatters (88) gelegt ist, dessen anderer Eingang an den Hoch/Rückschalt-Informationsausgang (1002) der Gangwahleinrichtung (10) angeschlossen ist und daß die Ausgänge der NAND-Gatter (87, 88) mit zweiten Rücksetzeingängen (1605, 1605') des Flipflops (16) verbunden sind.

21. Gangwechseleinrichtung nach einem der Ansprüche 15 bis 20, dadurch gekennzeichnet, daß das Zeitglied (23) ein RC-Glied (85, 86) ist, wobei der erste Rücksetzeingang (1604) des Flipflops (16) über den Widerstand (85) mit dem komplementären Ausgang (1602) und über den Kondensator (86) mit Masse verbunden ist.

22. Gangwechseleinrichtung nach einem der Ansprüche 2 bis 21, dadurch gekennzeichnet, daß die zweiten Schaltmittel eine Schuberkennungseinheit (31) aufweisen, die die ihr zugeleitete Hoch/Rückschalt-Information (RH) im Lastbetrieb weiterleitet und im Schubbetrieb invertiert (RH') weiterleitet.

23. Gangwechseleinrichtung nach Anspruch 22, dadurch gekennzeichnet, daß die Schuberkennungseinheit (31) einen Komparator (118) aufweist, der eingangsseitig mit dem Ausgangssignal der Energieträgerzumessungsvorrichtung (15) und einer Schwellwertspannung beschaltet ist und dessen Ausgang auf einen Eingang einer Äquivalenzschaltung (123, 124, 125, 126, 127) geführt

15

ist, deren anderer Eingang an den Hoch/Rückschalt-Informationsausgang (1002) der Gangwahleinrichtung (10) angeschlossen ist.

24. Gangwechseleinrichtung nach Anspruch 23, dadurch gekennzeichnet, daß die Äquivalenzschaltung aus zwei Invertern (123, 126), zwei UND-Gattern (124, 125) und einem NOR-Gatter (127) besteht, wobei die Eingänge intern mit je einem der UND-Gatter (124, 125) direkt und mit dem jeweils anderen UND-Gatter (125, 124) über die Inverter (123, 126) verbunden sind und die Ausgänge der UND-Gatter (124, 125) auf das NOR-Gatter (127) geführt sind.

25. Gangwechseleinrichtung nach einem der Ansprüche 22 bis 24, dadurch gekennzeichnet, daß die Auswahleinheit (33) eingangsseitig an die Schuberkennungseinheit (31) und die Ausgänge (1601, 1602) des Flipflops (16) angeschlossen ist, und deren Ausgang mit dem Gangschaltventil (12) in Wirkungsverbindung steht.

26. Gangwechseleinrichtung nach Anspruch 25, dadurch gekennzeichnet, daß die Auswahleinheit (33) Schalter (128, 130) aufweist, mit denen der Ausgang (1601) und der komplementäre Ausgang (1602) des Flipflops (16) auf den Ausgang der Auswahleinheit (33) legbar ist und daß der Steuereingang des einen Schalters (128) direkt und der Steuereingang des anderen Schalters (130) über einen Inverter (129) vom Ausgang der Schuberkennungseinheit (31) steuerbar ist.

27. Gangwechseleinrichtung nach Anspruch 26, dadurch gekennzeichnet, daß eine Dekodierstufe (11) vorgesehen ist, die in Abhängigkeit von der Gangwahleinheit (10) die Ansteuerung der Gangschaltventile für den alten Gang und neuen Gang freigibt und daß der Ausgang der Auswahleinheit (33) über das Totzeitglied (34) mit dem dem neuen Gang zugeordneten Steuereingang (1101) und über das eine und das weitere Totzeitglied (34, 35) mit dem dem alten Gang zugeordneten Steuereingang (1102) verbunden ist.

28. Gangwechseleinrichtung nach einem der Ansprüche 15 bis 27, dadurch gekennzeichnet, daß die Sample-and-Hold-Einheit (32) als Operationsverstärker (153) in Verstärkerschaltung ausgebildet ist, dessen Eingang in Abwesenheit eines Schaltbefehles (S') vom Ausgang (1601) des Flipflops (16) an die Energieträgerzumessungsvorrichtung (15) angeschlossen ist und der bei Vorliegen eines Schaltbefehls (S') von der Energieträgerzumessungsvorrichtung (15) abgetrennt und auf Masse gelegt wird, wobei die Beschaltung des Operationsverstärkers (153) auf integrieren des Verhalten umgeschaltet wird.

29. Gangwechseleinrichtung nach einem der Ansprüche 22 bis 27, dadurch gekennzeichnet, daß die Druckstufenschaltung (36) zur Einstellung des Hauptdruckreglers (37) mit der Energieträgerzumessungsvorrichtung (15), der Schuberkennungseinheit (31) und dem Flipflop (16) in Wirkungsverbindung steht.

30. Gangwechseleinrichtung nach Anspruch 29, dadurch gekennzeichnet, daß die Druckstufenschaltung (36) einen Verstärker (160, 161, 162, 163, 164, 165, 166, 167) aufweist, der die Sample-and-Hold-Einheit (32) mit dem Hauptdruckregler (37) verbindet, wobei der Verstärkungsfaktor des Verstärkers (160, 161, 162, 163, 164, 165, 167) in Abhängigkeit von den Ausgangssignalen der Schuberkennungseinheit (31) und des Flipflops (16) in Stufen umschaltbar ist.

31. Gangwechseleinrichtung nach Anspruch 30, dadurch gekennzeichnet, daß der Verstärker (160, 161, 162, 163, 164, 165, 166, 167) als rückgekoppelter Operationsverstärker (161) ausgebildet ist, dessen Rückkopplungswiderstand (163) weitere Widerstände (164, 165) durch Schalter (166, 167) zuschaltbar sind.

32. Gangwechseleinrichtung nach Anspruch 31, dadurch gekennzeichnet, daß der eine Schalter (166) von einem UND-Gatter (168) angesteuert wird, dessen Eingänge mit der Schuberkennungseinheit (31) und dem Ausgang (1601) des Flipflops (16) verbunden sind.

33. Gangwechseleinrichtung nach einem der Ansprüche 31 oder 32, dadurch gekennzeichnet, daß der andere Schalter (167) von einem NOR-Gatter (169) angesteuert wird, dessen Eingänge mit der Schuberkennungseinheit (31) und dem komplementären Ausgang (1602) des Flipflops (16) verbunden sind.

## Revendications

1. Installation de changement de vitesse pour boîtes de vitesses manoeuvrées en charge, avec un dispositif sélecteur de vitesse (10), un régulateur de pression principale (37), pour commander des soupapes de passage de vitesse (12) de la boîte de vitesses manoeuvrée en charge, un capteur de vitesse de rotation du moteur et un capteur de vitesse de rotation de sortie de boîte de vitesses (14, 13), des premiers moyens de commutation (24, 25) pour déterminer la marche hypersynchrone, hyposynchrone ou synchrone de la boîte de vitesses manoeuvrée en charge, un dispositif de dosage (15) de support d'énergie associé au moteur d'entraînement monté devant la boîte de vitesses manoeuvré en charge et des moyens de synchronisation, caractérisée en ce que lors du déclenchement d'une opération de manoeuvre par le dispositif sélecteur de vitesse (10), les moyens de synchronisation règlent la vitesse de rotation ($n_M$) du moteur à la vitesse de rotation de synchronisme par un régulateur (28) à fonction de temps prédéterminée, en ce que des seconds moyens de commutation (10, 31) sont

16

prévus pour distinguer des opérations de manoeuvre ascendante/rétrograde ainsi que en charge/en frein moteur, en ce que les points de manoeuvre des soupapes de passage de vitesse (12) sont réglés par une unité de sélection (33) et le régulateur de pression principale (37) en fonction du type de manoeuvre détecté.

2. Installation de changement de vitesse selon la revendication 1, caractérisée en ce que le dispositif sélecteur de vitesse (10) fournit un ordre de manoeuvre (S) et une information de manoeuvre ascendante/rétrograde (RH), en ce qu'une opération de manoeuvre est de préférence déclenchée par un ordre de manoeuvre (S) par l'intermédiaire d'une bascule (16) et est terminée lorsque les premiers moyens de commutation (24, 25) fournissent un signal de synchronisme ou lorsque la dérivée première en fonction du temps de la vitesse de rotation de sortie de la boîte de vitesses ($\dot{n}_G$, étage de différentiation 21) s'abaisse au-dessous d'une valeur prédéterminée lors des opérations de manoeuvre ascendante ou dépasse une valeur prédéterminée lors des opérations de manoeuvre descente (dispositif de synchronisation imposée (22) ou lorsqu'un temps prédéterminé s'est écoulé depuis le déclenchement d'une opération de manoeuvre (organe de temporisation 23).

3. Installation de changement de vitesse selon revendication 2, caractérisée en ce que dans le cas de manoeuvre ascendante, l'ordre de manoeuvre (S) est supprimé par un étage de blocage (17) si le signal de sortie du dispositif de dosage (15) de support d'énergie dépasse une valeur prédéterminée et si la dérivée première en fonction du temps ($\dot{n}_G$) de la vitesse de rotation de sortie de la boîte de vitesses s'abaisse au-dessous d'une valeur prédéterminée.

4. Installation de changement de vitesse selon l'une des revendications précédentes, caractérisée en ce que lors de déclenchement d'une opération de manoeuvre, l'entrée de valeur de consigne du dispositif de dosage (15) du support d'énergie est commutée d'un capteur de valeur de consigne (27) au régulateur (28) et est ramenée du régulateur (28) au capteur de valeur de consigne (27) à la fin de l'opération de manoeuvre.

5. Installation de changement de vitesse selon revendication 4, caractérisée en ce que pour les opérations de manoeuvre ascendante et de manoeuvre rétrograde, une valeur de consigne de gradient de vitesse de rotation ($\dot{n}_{MHS}$, $\dot{n}_{MRS}$) peut être respectivement branchée sur le régulateur (28), et en ce qu'une valeur de consigne peut être envoyée au régulateur (28) à partir du capteur de vitesse de rotation du moteur (14) par l'intermédiaire d'un étage de différentiation (29).

6. Installation de changement de vitesse selon l'une des revendications précédentes, caractérisée en ce que le signal de sortie du dispositif de dosage de support d'énergie (15) est, lors du déclenchement, d'une opération de manoeuvre, verrouillé à sa valeur instantanée, de préférence par un étage d'échantillonnage et de retenue (32).

7. Installation de changement de vitesse selon l'une des revendications précédentes, caractérisée en ce qu'en l'absence d'une opération de manoeuvre, la pression principale est réglée par un montage à étages de pression (36) à une première valeur de pression principale supérieure à la valeur de pression principale nécessaire pour transmettre le couple considéré, à une seconde valeur de pression principale inférieure à la première lors du déclenchement, d'une opération de manoeuvre ascendante en charge ou rétrograde en frein moteur et à une troisième valeur de pression principale inférieure à la valeur de pression principale nécessaire pour transmettre le couple considéré lors du déclenchement d'une opération de manoeuvre ascendante en frein moteur ou rétrograde en charge.

8. Installation de changement de vitesse selon revendication 7, caractérisée en ce que la première valeur de pression principale est égale à 150% de valeur de pression principale nécessaire pour transmettre le couple considéré, la seconde valeur de pression principale à 100% et la troisième valeur de pression principale à 30% de cette valeur.

9. Installation de changement de vitesse selon l'une des revendications précédentes, caractérisée en ce que lors de l'exécution d'une opération de manoeuvre ascendante en charge ou d'une opération de manoeuvre rétrograde en frein moteur, la commutation des soupapes de passage de vitesse (12) provoquant le changement de vitesse est commandée par l'unité de sélection (33) lors du déclenchement de l'opération de manoeuvre ou peu après.

10. Installation de changement de vitesse selon revendication 9, caractérisée en ce qu'au moyen d'au moins deux organes de temps mort (34, 35), la soupape de passage de vitesse associée à l'ancienne vitesse est actionnée, par rapport à l'ordre de manoeuvre (S), avec un premier temps mort et la soupapes de passage de vitesse associée à la nouvelle vitesse avec un second temps mort.

11. Installation de changement de vitesse selon revendication 10, caractérisée en ce que le second temps mort es plus court que le premier.

12. Installation de changement de vitesse selon l'une des revendications précédentes, caractérisée en ce que lors de l'exécution d'une opération de manoeuvre rétrograde en charge ou d'une opération de manoeuvre ascendante en frein moteur, la commutation des soupapes de passage de vitesse (12) provoquant le changement de vitesse est commandée par l'unité de sélection (33) avec le signal de synchronisation fourni par les premiers moyens de commutation (24, 25) ou peu après si la dérivée première en fonction du temps ($\dot{n}_G$) de la vitesse de rotation de sortie de la boîte de vitesses lors d'une manoeuvre ascendante en frein.moteur s'abaisse au-dessous d'une valeur prédéterminée ou lors de manoeuvres rétrogrades en charge dépasse une valeur prédéterminée, ou quand un temps prédéterminé s'est écoulé après le déclenchement d'une opération de manoeuvre.

0 001 298

13. Installation de changement de vitesse selon revendication 12, caractérisée en ce qu'au moyen d'au moins deux organes de temps mort (34, 35), la soupape de passage de vitesse associée à l'ancienne vitesse est actionnée, par rapport au signal déclenchant la fin de l'opération de changement de vitesse, avec un premier temps mort et la soupape de passage de vitesse associée à la nouvelle vitesse avec un second temps mort.

14. Installation de changement de vitesse selon revendication 13, caractérisée en ce que le second temps mort est plus court que le premier.

15. Installation de changement de vitesse selon l'une des revendications précédentes, caractérisée en ce que la bascule (16) est prévue avec une entrée de commande (1603), des entrées de rappel (1604, 1605, 1606), une sortie (1601) et une sortie complémentaire (1602), en ce que l'entréé de commande (1603) est un liaison de fonctionnement avec la sortie d'ordre de manoeuvre (1001) du dispositif sélecteur de vitesse (10), en ce que la première entrée de rappel (1604) est reliée à l'organe de temporisation (23) raccordé à la sortie (1601) de la bascule (16), une seconde entrée de rappel (1605) est reliée au dispositif de synchronisation imposée (22) et la troisième entrée de rappel (1606) est reliée aux premiers moyens de commutation (24, 25), en ce que la sortie (1601) de la bascule (16) est en liaison de fonctionnement avec le régulateur de pression principale (37) des soupapes de passage de vitesse (12), de préférence avec l'unité d'échantillonnage et de retenue (32) branchée à la suite du dispositif de dosage (15) de support d'énergie et avec un commutateur (26) branché devant le dispositif de dosage (15) de support d'énergie.

16. Installation de changement de vitesse selon revendication 15, caractérisée en ce que la bascule (16) est réalisée avec des portes NON-ET (83, 84), en ce que l'entrée de commande (1603) est raccordée à l'étage de blocage (17) agencé en tant que porte OU (70) dont l'une des entrées est reliée, par l'intermédiaire d'un étage formateur d'impulsions (70), à la sortie d'ordre de manoeuvre (1001) du dispositif sélecteur de vitesse (10) et dont l'autre entrée est reliée à une porte ET (18), dont les entrées sont reliées à des comparateurs (79, 80) branchés en tant qu'étages à valeur de seuil reliés au capteur (13) de vitesse de rotation de sortie de la boîte de vitesses et au dispositif de dosage (15) de support d'énergie.

17. Installation de changement de vitesse selon revendication 16, caractérisée en ce que l'etage formateur d'impulsions (71) est agencé en tant que porte NON-ET (72) dont l'une des entrées est directement commandée par la sortie d'ordre de manoeuvre (1001) du dispositif sélecteur de vitesse (10) et dont l'autre entrée est commandée par cette sortie par l'intermédiaire d'un inverseur (73).

18. Installation de changement de vitesse selon l'une des revendications précédentes, caractérisée en ce que les premiers moyens de commutation (24, 25) sont constitués par un comparateur (24), relié au capteur (14) de vitesse de rotation du moteur, et par un étage de pondération (25) relié au capteur (13) de vitesse de rotation de sortie de la boîte de vitesses et au comparateur (24).

19. Installation de changement de vitesse selon l'une des revendications 1 à 17, caractérisée en ce que les premiers moyens de commutation (24, 25) sont constitués par deux comparateurs (102, 103) avec respectivement une dérivation réglable ($V_H$, $V_R$), dont les entrées sont reliées au capteur (14) de vitesse de rotation du moteur et par un étage de pondération (25) relié au capteur (13) de vitesse de rotation de sortie de la boîte de vitesses et aux comparateurs (102, 103).

20. Installation de changement de vitesse selon l'une des revendications 15 à 19, caractérisée en ce que le dispositif de synchronisation imposée (22) comporte un comparateur (90), dont l'entrée non inversante est raccordée au capteur (13) de vitesse de rotation du moteur et dont l'entrée inversante est branchée sur une tension de valeur de seuil, et un autre comparateur (91) dont l'entrée inversante est reliée à l'étage de différentiation (21) et dont l'entrée non inversante est branchée sur une tension de valeur de seuil, en ce que la sortie de l'un des comparateurs (90), est reliée à une entrée d'une porte NON-ET (87) dont l'autre entrée est raccordée, par l'intermédiaire d'un inverseur (89), à la sortie (1002) d'informations de manoeuvre ascendante/rétrograde de l'unité de sélection de vitesse (10), en ce que la sortie de l'autre comparateur (91) est reliée à une entrée d'une porte NON-ET (88) dont l'autre entrée est raccordée à la sortie (1002) d'informations de manoeuvre ascendante/rétrograde du dispositif sélecteur de vitesse (10), et en ce que les sorties des portes NON-ET (87, 88) sont reliées à des secondes entrées de rappel (1605, 1605') de la bascule (16).

21. Installation de changement de vitesse selon l'une des revendications 15 à 20, caractérisée en ce que l'organe de temporisation (23) est un organe RC (85, 86), la première entrée de rappel (1604) de la bascule (16) étant reliée à la sortie complémentaire (1602) par l'intermédiaire de la résistance (85) et à la masse par l'intermédiaire du condensateur (86).

22. Installation de changement de vitesse selon l'une des revendications 2 à 21, caractérisée en ce que les seconds moyens de commutation comporte une unité (31) de détection de frein moteur transmettant en fonctionnement en charge l'information de manoeuvre ascendante/rétrograde qui lui est envoyée et la transmettant avec inversion (RH') en fonctionnement en frein moteur.

23. Installation de changement de vitesse selon revendication 22, caractérisée en ce que l'unité (31) de détection de frein moteur comporte un comparateur (118) branché côté entrée sur le signal de sortie du dispositif de dosage (15) de support d'énergie et sur une tension de valeur de seuil, et dont la sortie est reliée à une entrée d'un montage d'équivalence (123, 124, 125, 126, 127) dont l'autre

18

entrée est raccordée à la sortie (1062) d'information du dispositif sélecteur de vitesse (10).

24. Installation de changement de vitesse selon revendication 23, caractérisée en ce que le montage d'équivalence est constitué par deux inverseurs (123, 126), deux portes ET (124, 125) et une porte NI (127), les entrées étant respectivement reliées intérieurement à l'une des portes ET (124, 125) directement et à chaque autre porte ET (125, 124) par l'intermédiaire des inverseurs (123, 126), les sorties des portes ET (124, 125) étant reliées à la porte NI (127).

25. Installation de changement de vitesse selon l'une des revendications 22 à 24, caractérisée en ce que l'unité de sélection (33) est raccordée côté entrée à l'unité (31) de détection de frein moteur et aux sorties (1601, 1602) de la bascule (16), les sorties de cette unité étant en liaison de fonctionnement avec la soupape de passage de vitesse (12).

26. Installation de changement de vitesse selon revendication 25, caractérisée en ce que l'unité de sélection (33) comporte des commutateurs (128, 130) par lesquels la sortie (1601) et la sortie complémentaire (1602) de la bascule (16) peuvent être reliées à la sortie de l'unité de sélection (33), et en ce que l'entrée de commande de l'un des commutateurs (128) peut être commandée directement par la sortie de l'unité (31) de détection de frein moteur, l'entrée de commande de l'autre commutateur (130) pouvant être commandée par cette sortie par l'intermédiaire d'un inverseur (129).

27. Installation de changement de vitesse selon revendication 26, caractérisée en ce qu'il est prévu un étage décodeur (11) libérant, sous la dépendance de l'unite de sélection de vitesse (10), la commande des soupapes de passage de vitesse pour l'ancienne vitesse et la nouvelle vitesse, et en ce que la sortie de l'unité de sélection (33) est reliée, par l'intermédiaire de l'organe de temps mort (34), à l'entrée de commande (1101) associée à nouvelle vitesse et, par l'intermédiaire de l'un et l'autre organes de temps mort (34, 35), à l'entrée de commande (1102) associée à l'ancienne vitesse.

28. Installation de changement de vitesse selon l'une des revendications 15 à 27, caractérisée en ce que l'unité d'échantillonage et de retenue (32) est réalisée sous forme d'amplificateur opérationnel (153) dans le montage amplificateur, l'entrée de cet amplificateur étant, en l'absence d'un ordre de manoeuvre (S') en provenance de la sortie (1601) de la bascule (16), raccordée au dispositif de dosage (15) de support d'énergie et, en présence d'un ordre de manoeuvre (S'), séparée du dispositif de dosage (15) de support d'énergie et reliée à la masse, le branchement de l'amplificateur opérationnel (153) étant commuté sur le comportement intégrateur.

29. Installation de changement de vitesse selon l'une des revendications 22 à 27, caractérisé en ce que le montage à étages de pression (36) est, pour régler le régulateur de pression principal (37), en liaison de fonctionnement avec le dispositif de dosage (15) de support d'énergie, l'unité (31) de détection de frein moteur et la bascule (16).

30. Installation de changement de vitesse selon revendication 29, caractérisée en ce que le montage à étages de pression (36) comporte un amplificateur (160, 161, 162, 163, 164, 165, 166, 167) reliant l'unité d'échantillonnage et de retenue (32) au régulateur de pression principale (37), le facteur d'amplification de l'amplificateur (160, 161, 162, 163, 164, 165, 166, 167) pouvant être commuté par étages en fonction des signaux de sortie de l'unité (31) de détection de frein moteur et de la bascule (16).

31. Installation de changement de vitesse selon revendication 30, caractérisée en ce que l'amplificateur (160, 161, 162, 163, 164, 165, 166, 167) est réalisé sous forme d'amplificateur opérationnel couplé en réaction (161), d'autres résistances (164, 165) pouvant être branchées sur sa résistance de couplage de réaction (163) par des commutateurs (166, 167).

32. Installation de changement de vitesse selon revendication 31, caractérisée en ce que, l'un des commutateurs (166) est commandé par une porte ET (168) dont les entrées sont reliées à l'unité (31) de détection de frein moteur et à la sortie (1601) de la bascule (16).

33. Installation de changement de vitesse selon l'une des revendications 31 ou 32, caractérisée en ce que l'autre commutateur (167) est commandé par une porte NI (169) dont les entrées sont reliées à l'unité (31) de détection de frein moteur et à la sortie complémentaire (1602) de la bascule (16).

## Claims

1. Gear changing apparatus for load operative transmissions comprising a gear selection device (10), a main pressure regulator (37) for controlling gear changing valves (12) for the transmission, an engine speed sensor and a transmission output speed sensor (14, 13), first switching means (24, 25) for detecting the over-synchronous, under-synchronous or synchronous operation of the transmission, an energy carrier controlling device (15) associated with the driving engine connected in front of the transmission, and means for synchronising, characterised in that, on initiation of a gear changing operation by the gear selection device (10), the means for synchronising control the engine speed ($n_M$) to the synchronous speed through a controller (28) with a predetermined time function, that second switching means (10, 31) are provided for the discrimination of changing-up/ changing-down and load applying/load absorbing gear changing operations, that the switching points of the gear changing valves (12) are set by a selector unit (33) and the main pressure regulator (37) is set in accordance with the type of change detected.

2. Gear changing apparatus according to claim 1, characterised in that, the gear selection device (10) delivers a gear changing command (S) and a changing-up/changing-down instruction (RH), that a changeover operation is preferably initiated by a flipflop (16) and is then terminated when the first switching means (24, 25) deliver a synchronising signal or when the first differentiation with respect to time of the transmission output speed ($n_Q$, differentiating stage 21) during changing-up operations falls below a predetermined value or during changing-down operations exceeds a predetermined value (self-synchronising device 22) or when a predetermined time has elapsed since the initiation of the switching operation (timing element 23).

3. Gear changing apparatus according to claim 2, characterised in that, in the case of changing-up, the gear changing command (S) is suppressed by an interlocking stage (17), when the output signal from the energy carrier control device (15) exceeds a predetermined value and the first differentiation with respect to time of the transmission output speed ($n_Q$) falls below a predetermined value.

4. Gear changing apparatus according to one of the preceding claims, characterised in that, on initiation of a changeover operation, the set value input to the energy carrier controlling device (15) switches over from a set value generator (27) to the controller (28) and is switched back again from the controller (28) to the set value generator (27) at the termination of the changeover operation.

5. Gear changing apparatus according to claim 4, characterised in that, at least one respective speed gradient set value ($n_{MHS}$, $n_{MRS}$) can be switched to the controller (28) for changing-up and changing-down operations and that a set value from the engine speed sensor (14) is transmitted to the controller (28) through a differentiating stage (29).

6. Gear changing apparatus according to one of the preceding claims, characterised in that, on initiation of a switching over operation, the output signal from the energy carrier controlling device (15) is held at its instantaneous value, preferably by a sample and hold stage (32).

7. Gear changing apparatus according to one of the preceding claims, characterised in that, in the absence of a changeover operation, the main pressure is set, through a step-by-step pressure control circuit (36), to a first main pressure value lying above the main pressure necessary for the transmission of the particular torque, on the initiation of a changing-up operation under load applying conditions or a changing-down operation under load absorbing conditions, the main pressure value is reduced to a second main pressure value lying below the first value and on the initiation of a changing-up operation under load absorbing conditions or a changing-down operation under load applying conditions, the main pressure value is reduced to a third main pressure value lying below the main pressure value necessary for the transmission of the particular torque.

8. Gear changing apparatus according to claim 7, characterised in that, the first main pressure value is 150%, the second is 100% and the third is 30% of the main pressure value necessary for the transmission of the particular torque.

9. Gear changing apparatus according to one of the preceding claims, characterised in that, on carrying out a changing-up operation under load applying conditions or a changing-down operation under load absorbing conditions, the changing over of the gear changing valves (12) effecting the gear changing is produced by the selection unit (33) at or shortly after the initiation of the changing over operation.

10. Gear changing apparatus according to claim 9, characterised in that, by means of at least two dead time circuits (34, 35), the gear changing valve associated with the old gear is actuated with a first dead time with respect to the gear changing command (S) and the gear changing valve association with the new gear is actuated with a second dead time with respect to the gear changing command (S).

11. Gear changing apparatus according to claim 10, characterised in that, the second dead time is shorter than the first.

12. Gear changing apparatus according to one of the preceding claims, characterised in that, by means of the selection unit (33) when carrying out a changing-down operation under load applying conditions or a changing-up operation under load absorbing conditions, the changing over of the gear changing valves (12) effecting the gear change is either carried out by the synchronising signal delivered by the first switching means (24, 25) or when the first differentiation of the transmission output speed ($n_Q$) with respect to time falls below a predetermined value during a changing-up under load absorbing conditions or exceeds a predetermined value during changing-down under load applying conditions or is effected respectively shortly thereafter or when a predetermined time has elapsed since the initiation of the changeover operation.

13. Gear changing apparatus according to claim 12, characterised in that, by means of at least two dead time circuits (34, 35), the gear changing valve associated with the old gear is actuated with a first dead time with respect to the signal triggering the end of the gear changing operation and the gear changing valve associated with the new gear is actuated with a second dead time with respect to the signal triggering the end of the gear changing operation.

14. Gear changing apparatus according to claim 13, characterised in that, the second dead time is shorter than the first.

15. Gear changing apparatus according to one of the preceding claims, characterised in that, the flipflop (16) is provided with a setting input (1603), resetting inputs (1604, 1605, 1606), an output (1601) and a complementary output (1602), that the setting input (1603) is in operative communication with the gear changing command output (1001) of the gear selection device (10), that the first resetting input (1604) is connected to the timing element (23), which is connected to the output (1601) from the flipflop (16), a second resetting input (1605) is connected to the self-synchronising device (22) and the third resetting input (1606) is connected to the first switching means (24, 25), and tht the output (1601) from the flipflop (16) is in operative communication with the main pressure regulator (37), the gear changing valves (12), preferably the sample and hold unit (32) connected in series after the energy carrier controlling device (15) and with a changeover switch (26) connected in series in front of the energy carrier controlling device (15).

16. Gear changing apparatus according to claim 15, characterised in that, the flipflop (16) is constructed with NAND gates (83, 84), that the setting input (1603) is connected to the blocking stage (17) formed as an OR gate (70) one input to which is connected through a pulse shaping stage (70) with the gear changing command output (1001) from the gear selection device (10) and the other input to which is connected to an AND gate (18) the inputs to which are applied to comparators (79, 80) designed as threshold value stages and which are connected to the transmission output speed sensor (13) and the energy carrier controlling device (15).

17. Gear changing apparatus according to claim 16, characterised in that, the pulse shaping stage (71) is designed as a NAND gate (72) one input to which is controlled directly from the gear changing command output (1001) of the gear selection device (10) and the other input to which is controlled from the gear changing command output (1001) fromn the gear selection device (10) through an inverter (73).

18. Gear changing apparatus according to one of the preceding claims, characterised in that, the first switching means (24, 25) consist of a comparator (24), which is connected to the engine speed sensor (14), and of a weighting stage (25) which is connected to the transmission output speed sensor (13) and to the comparator (24).

19. Gear changing apparatus according to one of claims 1 to 17, characterised in that, the first switching means (24, 25) consist of two comparators (102, 103) each with a respective adjustable derivative ($V_H$, $V_R$) the inputs to which are connected to the engine speed sensor (14) and of a weighting stage (25) which is connected to the transmission output speed sensor (13) and to the comparators (102, 103).

20. Gear changing apparatus according to one of claims 15 to 19, characterised in that, the self-synchronising device (22) is a comparator (90) the non-inverting input to which is connected to the transmission output speed sensor (13) through the differentiating stage (21) and the inverting input to which is connected to a threshold value voltage and is provided with another comparator (91) the inverting input to which is connected to the differentiating stage (21) and the non-inverting input to which is connected to a threshold value voltage, that the output from one comparator (90) is applied to one input to a NAND gate (87) the other input to which is connected through an inverter (89) to the changing-up/changing-down instruction output (1002) of the gear selection unit (10), that the output from the other comparator (91) is applied to one input to a NAND gate (88) the other input to which is connected to the changing-up/changing-down instruction output (1002) of the gear selection device (10) and that the outputs from the NAND gate (87, 88) are connected to two resetting inputs (1605, 1605') to the flipflop (16).

21. Gear changing apparatus according to one of claims 15 to 20, characterised in that, the timing element (23) is an RC-element (85, 86) wherein the first resetting input (1604) to the flipflop (16) is connected through the resistor (85) to the complementary output (1602) and is connected through the capacitor (86) to earth.

22. Gear changing apparatus according to one of claims 2 to 21, characterised in that, the second switching means have a thrust detecting unit (31) which, when operating under load applying conditions, transmit the changing-up/changing-down instruction (RH) applied to them and when operating under load absorbing conditions transmit the instruction (RH') inverted.

23. Gear changing apparatus according to claim 22, characterised in that, the thrust detecting unit (31) has a comparator (118) which is connected on the input side to the output signal from the energy carrier controlling device (15) and a threshold value voltage and the output from which is applied to one input to an equivalence circuit (123, 124, 125, 126, 127), the other input to which is connected to the changing-up/changing-down instruction output (1002) from the gear selection device (10).

24. Gear changing apparatus according to claim 23, characterised in that, the equivalence circuit consists of two inverters (123, 126), two AND gates (124, 125) and a NOR gate (127) wherein the inputs are connected directly internally with a respective (AND gate 124, 225) and to the respective other AND gate (125, 124) through the inverter (123, 126) and the outputs from the AND gates (124, 125) are applied to the NOR gate (127).

25. Gear changing apparatus according to one of claims 22 to 24, characterised in that, on the input side, the selection unit (33) is connected to the thrust detecting unit (31) and to the outputs (1601, 1602) from the flipflop (16) and its output is in operative communication with gear changing valve (12).

26. Gear changing apparatus according to claim 25, characterised in that, the selection unit (33) is provided with switches (128, 130) by means of which the output (1601) and the complementary output (1602) from the flipflop (16) can be applied to the output from the selection unit (33) and that the control input to one of the switches (128) is controllable directly form the output from the thrust detecting unit (31) and the control input to the other switch (130) is controllable by the output from the thrust detecting unit (31) through an inverter (129).

27. Gear changing apparatus according to claim 26, characterised in that, a decoding stage (11) is provided which clears the control of the gear changing valves for the old gear and the new gear and that the output from the selection unit (33) is connected through the dead time element (34) to the control input associated with the new gear and is connected through the one and the further dead time element (34, 35) to the control input (1102) associated with the old gear.

28. Gear changing apparatus according to one of claims 15 to 27, characterised in that, the sample and hold unit (32) is arranged in an amplifying circuit as an operational amplifier (153) the input to which is connected to the energy carrier controlling device (15) in the absence of a gear changing command (S') from the output (1601) from the flipflop (16) and which, in the presence of a gear changing command (S') is isolated from the energy carrier controlling device (15) and is connected to earth, whereby the circuitry of the operational amplifier (153) is changed over to an integrating mode of operation.

29. Gear changing apparatus according to one of claims 22 to 27, characterised in that, the step-by-step switching device (36) for adjusting the main pressure regulator (37) is in operative communication with the energy carrier controlling device (15), the thrust detecting unit (31) and the flipflop (16).

30. Gear changing apparatus according to claim 29, characterised in that, the step-by-step pressure changing device (36) comprising an amplifier (160, 161, 162, 163, 164, 165, 166, 167) which connects the sample and hold unit (32) to the main pressure regulator (37) whereby the amplification factor of the amplifier (160, 161, 162, 163, 164, 165, 166, 167) can be switched over in stages in accordance with the output signals from the thrust detecting unit (31) and from the flipflop (16).

31. Gear changing apparatus according to claim 30, characterised in that, the amplifier (160, 161, 162, 163, 164, 165, 166, 167) is designed as a feed-back operational amplifier (161) to the feed-back resistor (163) of which can be connected further resistors (164, 165) by switches (166, 167).

32. Gear changing apparatus according to claim 31, characterised in that, one switch (166) is controlled by an AND gate (168) the inputs to which are connected to the thrust detecting unit (31) and the output (1601) from which is connected to the flipflop (16).

33. Gear changing apparatus according to one of claims 31 or 32, characterised in that, the other switch (167) is controlled by a NOR gate (169) the inputs to which are connected to the thrust detecting unit (31) and to the complementary output (1602) from the flipflop (16).

Fig.1

0 001 298

# Fig.2    Fig.3    Fig.4    Fig.5

a)

$t_s$    40    41    $t_{\bar{s}}$    $t_s$    48    $t_{\bar{s}}$    $t_s$    53    $t_{\bar{s}}$    $t_s$    58    $t_{\bar{s}}$

b)

42    43    49    54    59

c)

0    0    0    0
1    44    1    50    1    55    1    60

d)

0    0    0    0
1    45    1    51    1    56    1    61

e)

46    52    57    62
47

0 001 298

Fig.6

Fig.9

# Fig.7

# Fig.8

0 001 298

# Fig. 10

# Fig. 11